(19) Europäisches Patentamt / European Patent Office / Office européen des brevets

(11) EP 1 860 066 B1

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(51) Int Cl.:
***C01B 33/187*** *(2006.01)* ***C01B 33/193*** *(2006.01)*
***C09K 3/10*** *(2006.01)*

(21) Anmeldenummer: **07107895.0**

(22) Anmeldetag: **10.05.2007**

(54) **Hydrophile Kieselsäure für Dichtungsmassen**

Hydrophilic silica for sealing compounds

Silice hydrophile pour masses d'étanchéité

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.05.2006 DE 102006024590**

(43) Veröffentlichungstag der Anmeldung:
**28.11.2007 Patentblatt 2007/48**

(73) Patentinhaber: **Evonik Degussa GmbH**
**45128 Essen (DE)**

(72) Erfinder:
- **Panz, Christian**
  **50389 Wesseling-Berzdorf (DE)**
- **Obladen, Helga**
  **50321 Brühl (DE)**
- **Allerdisse, René**
  **53332 Bornheim (DE)**
- **Meier, Karl**
  **53347 Alfter (DE)**
- **Ruf, Markus**
  **53347 Alfter-Witterschlick (DE)**
- **Kempf, Michael**
  **63517 Rodenbach (DE)**
- **Scholz, Mario**
  **63584 Gründau (DE)**
- **Kuhn, Dieter**
  **63517 Rodenbach (DE)**

(56) Entgegenhaltungen:
**EP-A- 1 561 727** **EP-A- 1 561 728**
**DE-A1- 2 610 207** **DE-A1- 2 729 244**
**JP-A- 6 001 606** **US-A- 4 681 750**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 860 066 B1

## Beschreibung

Die vorliegende Erfindung betrifft hydrophile Fällungskieselsäuren, die sich besonders gut für den Einsatz in RTV-1K Dichtungsmassen eignen, ein Verfahren zu deren Herstellung und deren Verwendung zur Verdickung von Dichtungsmassen.

Unter Dichtungsmassen sind elastische, in flüssiger bis zähflüssiger Form aufgebrachte Stoffe zum Abdichten von Gebäuden oder Einrichtungen gegen Wasser, atmosphärischen Einfluss oder aggressive Medien zu verstehen.

Siliconkautschuke sind in den gummielastischen Zustand überführbare Massen, welche als Grundpolymere Polydiorganosiloxane enthalten, die Vernetzungsreaktionen zugängliche Gruppen aufweisen. Als solche kommen vorwiegend H-Atome, OH-Gruppen und Vinyl-Gruppen in Frage, die sich an den Kettenenden befinden, aber auch in die Kette eingebaut sein können. In dieses System sind Füllstoffe als Verstärker eingearbeitet, deren Art und Menge das mechanische und chemische Verhalten der Vulkanisate deutlich beeinflussen. Siliconkautschuke können durch anorganische Pigmente gefärbt werden. Man unterscheidet zwischen heißvulkanisierenden und kaltvulkanisierenden Siliconkautschuken (high / room temperature vulcanizing = HTV/RTV).

Bei den kalthärtenden oder RTV-Siliconkautschuk-Massen lassen sich Einkomponentensysteme und Zweikomponentensysteme unterscheiden. Die erste Gruppe (RTV-1K) polymerisiert langsam bei Raumtemperatur unter dem Einfluss von Luftfeuchtigkeit, wobei die Vernetzung durch Kondensation von SiOH-Gruppen unter Bildung von Si, O-Bindungen erfolgt. Die SiOH-Gruppen werden durch Hydrolyse von SiX-Gruppen einer intermediär aus einem Polymer mit endständigen OH-Gruppen und einem sogenannten Vernetzer $R\text{-}SiX_3$ (z. B. X = $-O\text{-}CO\text{-}CH_3$, -NHR) entstehenden Spezies gebildet. Bei Zweikomponentenkautschuken (RTV-2K) werden als Vernetzer z. B. Gemische aus Kieselsäureestern (z.B. Ethylsilicat) und Zinn-organische Verbindungen verwendet, wobei als Vernetzungsreaktion die Bildung einer Si-O-Si-Brücke aus =Si-OR u. =Si-OH (- = Methylgruppe; R = organischer Rest) durch Alkohol-Abspaltung erfolgt.

Zur Verdickung von RTV-1K-Siliconkautschuk werden u.a. Kieselsäuren eingesetzt. Diese dürfen aufgrund der Hydrolyseempfindlichkeit der Silicondichtungsmassen möglichst wenig Feuchte in das System einbringen. Daher werden bisher fast ausschließlich pyrogene Kieselsäuren für diese Anwendung eingesetzt. Hydrophile Fällungskieselsäuren konnten aufgrund ihrer hohen Feuchtegehalte bisher nicht verwendet werden.

In der Patentschrift US 5,395,605 werden Fällungskieselsäuren mit einer Wasseraufnahme (23 °C und 64 % r.F.) von weniger als 4 % beansprucht, deren Stampfdichten über 100 g/l liegen. Die Kieselsäuren aus der US 5395605 können jedoch nur in HTV-Silikonkautschuk und in der Kabelextrusion verwendet werden. Für den Einsatz in RTV1-Siliconkautschuk sind sie ungeeignet, da die Stampfdichte zu hoch ist und damit die Verdickung (Fließpunkt) zu niedrig ausfallen würde. Das Verfahren der US 5,395,605 weist den Nachteil auf, das eine sehr lange thermische Behandlung der Kieselsäuren, bei sehr hoher Temperatur erfolgen muss. Dadurch wird der Prozess wirtschaftlich wenig interessant. Ferner führt die Temperaturbehandlung gemäß US 5,395,605 zu einer Verhärtung und Verbackung der Kieselsäuren, so dass eine Vermahlung nach der thermischen Behandlung zwingend notwendig ist.

WO 2005061384 zeigt die Herstellung und Verwendung, u.a. in Siliconkautschuk, von Kieselsäuren welche laut Anspruch eine Wasseraufnahme von < 6 % und einer DOP > 300 ml/100 g aufweisen sollen. Die in den Beispielen der WO 2005/061384 offenbarten Kieselsäuren weisen jedoch allesamt eine Wasseraufnahme zwischen 5,7 und 5,9 % auf und sind somit nicht für den Einsatz in RTV-1K Formulierungen geeignet. Folgerichtig wird in der WO 2005/061384 nur die Anwendung in Siliconkautschukformulierungen für Extrusionsverfahren (HTV) beschrieben.

In EP 1557446 werden ausschließlich HTV-Siliconkautschukformulierungen beschrieben. Die dort eingesetzten Kieselsäuren weisen einen Trocknungsverlust von < 4% auf. Angaben über die Gleichgewichtsfeuchte der verwendeten Kieselsäuren nach Einwirkung von hoher Luftfeuchtigkeit (diese darf nicht mit dem Trocknungsverlust verwechselt werden) finden sich in der EP 1557446 ebenso wenig wie Hinweise darauf, dass die dort beschriebenen Kieselsäuren in RTV-Siliconkautschukformulierungen eingesetzt werden können. Die in der EP 1557446 offenbarten Formulierungen werden zur Herstellung von Isoliermaterialien wie z. B. Kabelummantelungen verwendet.

Aus EP 1561727 sind Fällungskieselsäuren mit einem pH-Wert größer 8 bekannt. Bei der Herstellung der Kieselsäuren wird die getrocknete Kieselsäure nicht getempert und auch nicht alkalisiert.

Ferner sind aus US 4681750 Kieselsäuren für Batterieseparatoren mit verbessertem elektrischen Widerstand bekannt. Die Kieselsäure wird bei 1000° - 1200° getempert.

Zusammenfassend lässt sich somit feststellen, dass im Stand der Technik keine hydrophilen Fällungskieselsäuren offenbart werden, welche die hohen Anforderungen für den Einsatz in RTV-1K-Silikonkautschuk erfüllen. Daher besteht ein starker Bedarf nach solchen, für RTV-1K-Anwendungen geeigneten, hydrophilen Fällungskieselsäuren.

Ausgehend von dem zuvor beschriebenen Stand der Technik bestand die Aufgabe der vorliegenden Erfindung darin, Fällungskieselsäuren bereit zu stellen, die besonders gut als Verdicker und Verstärker in Elastomerenmischungen, speziell in RTV-1K-Silconkautschukformulierungen, geeignet sind. Ferner soll ein Verfahren zur Herstellung der erfindungsgemäßen Kieselsäuren zur Verfügung gestellt werden.

Weitere nicht explizit genannte Aufgaben ergeben sich aus dem Gesamtzusammenhang der Beschreibung, Beispiele und Ansprüche.

Überraschenderweise wurde gefunden, dass diese Aufgabe durch die in der nachfolgenden Beschreibung sowie in den Ansprüchen und den Beispielen näher definierten erfindungsgemäßen Kieselsäuren gelöst wird.

Gegenstand der vorliegenden Erfindung, sind hydrophile Fällungskieselsäuren, gekennzeichnet durch die folgenden physikalisch-chemischen Parameter:

Gleichgewichtsfeuchte
(bei 70 % relativer Feuchte (r. F.) / 20 °C)0,5 - 5,0 Gew.-%

| | |
|---|---|
| BET-Oberfläche | 50 - 250 $m^2/g$ |
| CTAB-Oberfläche | 50 - 250 $m^2/g$ |
| DBP (wasserfrei) | 200 - 350 g/100g |
| pH-Wert | 4-8 |

Gegenstand der Erfindung sind auch hydrophile Fällungskieselsäuren, die neben den genannten Parametern, unabhängig voneinander, einen oder mehrere der folgenden physikalisch-chemischen Parameter aufweisen:

| | |
|---|---|
| modifizierte Stampfdichte | ≤ 70 g/l |
| Glühverlust | 0,1 - 3,0 Gew.-% |
| Trocknungsverlust | 0,1 - 3,0 Gew.-% |
| pH-Wert | 4 - 8 |
| Silanolgruppendichte | 0,5 - 3,5 $SiOH/nm^2$ |
| Anteil an Partikeln < 1 μm in der volumenbezogene Partikelverteilung | 5 bis 100 % |
| $d_{90}$-Wert der volumenbezogenen Partikelverteilung | 0,01 bis 10 μm |

Ein weiterer Gegenstand der vorliegenden Erfindung ist ein Verfahren zur Herstellung der erfindungsgemäßen Fällungskieselsäuren gemäß einem der Ansprüche 9 - 13.

Ein weiterer Gegenstand der vorliegenden Erfindung ist die Verwendung der erfindungsgemäßen Kieselsäuren in Dichtungsmassen, insbesondere in Siliconkautschuk bzw. Silicondichtungsmassen und besonders bevorzugt in RTV-1K-Dichtungsmassen. Die Anwendung ist möglich in verschiedenen Vernetzungssystemen, z. B. acetoxy-vernetzend, alcoxy-vernetzend und oxim-vernetzend. Diese Systeme finden Anwendung z.B. in der Bauindustrie als Fugendichtungsmassen, in der Automobilindustrie als Kleb- und Dichtstoff und als Beschichtungsmassen für z.B. Textilgewebe.

Ein weiterer Gegenstand der Erfindung sind Dichtungsmassen auf Basis von Siliconkautschuk, die die erfindungsgemäßen Kieselsäuren enthalten, und deren Verwendung.

Die erfindungsgemäßen Fällungskieselsäuren haben unter anderem den Vorteil, dass sie aufgrund ihrer sehr niedrigen Feuchtigkeitsaufnahme über die Zeit (= Gleichgewichtsfeuchte) und zum Teil auch auf Grund ihrer geringen Anfangsfeuchte, ausgedrückt durch den Trocknungsverlust, nach Einarbeitung in Siliconkautschukmassen, speziell des Typs RTV-1K, eine hohe Lagerstabilität des Siliconkautschuks gewährleisten. RTV-1K-Siliconkautschuk polymerisiert langsam bei Raumtemperatur unter dem Einfluss von Luftfeuchtigkeit, wobei die Vernetzung durch Kondensation von SiOH-Gruppen unter Bildung von Si-O-Bindungen erfolgt. Die zur Verstärkung und Verdickung eingesetzten Füllstoffe wie z.B. Kieselsäuren dürfen daher nicht aktiv (durch die Anfangsfeuchte) Feuchtigkeit in das System mit eintragen, da sonst die Polymerisation des Siliconkautschuks vor der eigentlichen Verarbeitung beginnen würde. Dieser Effekt kann noch gesteigert werden, wenn die Kieselsäuren auch passiv (durch die Feuchtigkeitsaufnahme) nur möglichst wenig Feuchtigkeit in das System einbringen. Mit den erfindungsgemäßen Kieselsäuren ist es erstmals gelungen hydrophile gefällte Kieselsäuren mit einer ausreichend niedrigen Feuchtigkeitsaufnahme über die Zeit (= Gleichgewichtsfeuchte) herzustellen und somit das aktive und passive Einbringen von Feuchtigkeit in die Silikondichtungsmassen durch die gefällte Kieselsäure hinreichend zu verhindern.

In Summe führen die besonderen Eigenschaften der erfindungsgemäßen Fällungskieselsäuren unter anderem zu folgenden Vorteilen:

- hohe Lagerstabilität von RTV-1K-Siliconkautschukmassen nach Einarbeitung der erfindungsgemäßen Kieselsäuren,
- gute und schnelle Dispergierung und damit hohe Verdickungswirkung der Kieselsäure in RTV-1K-Siliconkautschukmassen.

Darüber hinaus bieten die erfindungsgemäßen Fällungskieselsäuren gegenüber den bisher in RTV1-Siliconkautschuk eingesetzten pyrogenen Kieselsäuren einen wesentlichen Kostenvorteil, da sie kostengünstiger hergestellt werden können.

Die Gegenstände der Erfindung werden nachfolgend im Detail beschrieben.

In der vorliegenden Erfindung werden die Begriffe Kieselsäure und Fällungskieselsäure synonym verwendet. Unter **hydrophilen** Fällungskieselsäuren sind dabei solche zu verstehen, deren Oberfläche sich beim Einrühren in Wasser hydrophil verhält, d.h. deren Oberfläche von Wasser vollständig benetzt wird und somit gegenüber Wasser einen Kontaktwinkel, der kleiner als 90° ist, aufweist. Die erfindungsgemäßen hydrophilen Fällungskieselsäuren haben bevorzugt einen Kohlenstoffgehalt von < 0,5 Gew.-%.

Die spezifische **BET-Oberfläche** beschreibt den Einfluss der Kieselsäure auf das Einarbeitungsverhalten in den Siliconkautschuk sowie die Rohmischungseigenschaften (vgl. S. Brunauer, P. H. Emmett, E. Teller, "Adsorption of Gases in Multimolecular Layers", J. Am. Chem. Soc. 60, 309 (1938)). So zeichnen sich die erfindungsgemäßen Kieselsäuren durch eine BET-Oberfläche 50 bis 250 $m^2/g$, bevorzugt von 100 bis 230 $m^2/g$, besonders bevorzugt von 120 bis 200 $m^2/g$ und ganz besonders bevorzugt 160 bis 190 $m^2/g$ aus.

Die spezifische **CTAB-Oberfläche** ist vorwiegend für die Verstärkungseigenschaft der Kieselsäure von entscheidender Bedeutung (vgl. Janzen, Kraus, Rubber Chem. Technol. 44, 1287 (1971)). Das Verstärkungspotential steigt mit zunehmender CTAB-Oberfläche. So zeichnen sich die erfindungsgemäßen Fällungskieselsäuren durch eine CTAB-Oberfläche von 50 bis 250 $m^2/g$, bevorzugt von 100 bis 230 $m^2/g$, besonders bevorzugt von 120 bis 200 $m^2/g$ und ganz besonders bevorzugt 160 bis 200 $m^2/g$ aus.

Es hat sich weiterhin herausgestellt, dass eine hohe **DBP-Aufnahme** der erfindungsgemäßen Kieselsäuren von Nutzen ist, um gute rheologische Eigenschaften zu erzielen. Zu hohe DBP-Werte können allerdings zu einer übermäßigen Viskositätserhöhung des Siliconkautschuks führen und sollten daher vermieden werden. Die erfindungsgemäßen Kieselsäuren weisen daher eine DBP-Aufnahme von 200 bis 350 g/(100 g) auf. Bevorzugt beträgt die DBP-Aufnahme 220 bis 330 g/(100 g), besonders bevorzugt 250 bis 320 g/(100 g) und ganz besonders bevorzugt 270 bis 320 g/(100 g).

Aufgrund der Hydrolyseempfindlichkeit der RTV-1K-Siliconkautschukmassen ist die **Gleichgewichtsfeuchte** (gemessen bei 70 % r. F. / 20 °C) ein wesentliches Kriterium der erfindungsgemäßen Kieselsäuren. Damit die Siliconkautschukmassen in der Kartusche/Tube eine hohe Lagerstabilität aufweisen, ist es notwendig, dass so wenig wie möglich Feuchtigkeit in das System eingeschleppt wird, da sonst ein vorzeitiges Aushärten vor der eigentlichen Anwendung zum Abdichten eintreten würde. Die erfindungsgemäßen Kieselsäuren zeichnen sich durch eine Gleichgewichtsfeuchte von 0,5 bis 5,0 Gew.-%, bevorzugt von 0,8 bis 4,5 Gew.-%, ganz besonders bevorzugt von 1,0 bis 4,0 Gew.-%, insbesondere bevorzugt von 1,0 bis 3,7 Gew.-% und speziell bevorzugt von 2,0 bis 3,7 Gew.-% aus.

In einer ersten bevorzugten Ausführungsform zeichnen sich die erfindungsgemäßen Kieselsäuren zudem durch eine im Vergleich zu Fällungskieselsäuren des Standes der Technik sehr spezielle **Silanolgruppendichte** aus. Zur Bestimmung der Silanolgruppendichte wird zunächst mittels $LiAlH_4$ die Anzahl der Silanolgruppen auf der Oberfläche der Kieselsäure ermittelt. Diese allein ist jedoch nicht aussagekräftig, da hydrophile Fällungskieselsäuren mit hoher Oberfläche in der Regel eine höhere absolute Anzahl an Silanolgruppen aufweisen als hydrophile Fällungskieselsäuren mit einer niedrigen Oberfläche. Daher ist die Silanolgruppenanzahl auf die Oberfläche der Kieselsäure zu beziehen. Als geeignete Oberfläche bietet sich hierfür die BET-Oberfläche an, da diese die Oberfläche beschreibt, die auch kleineren Molekülen wie z.B. Wasser zugänglich ist. Die Silanolgruppendichte der erfindungsgemäßen Kieselsäuren liegt bevorzugt im Bereich von 0,5 bis 3,5 $SiOH/nm^2$, bevorzugt von 0,5 bis 3,0 $SiOH/nm^2$, besonders bevorzugt von 1,0 bis 3,0 $SiOH/nm^2$ und ganz besonders bevorzugt von 1,5 bis 2,8 $SiOH/nm^2$. Ist die Anzahl an Silanolgruppen pro $nm^2$ zu niedrig, so kann dies eine zu niedrige Fließgrenze bewirken und sich dadurch negativ auf die Standfestigkeit der Silicondichtungsmassen auswirken. Eine optimierte Silanolgrupppendichte wirkt sich zudem positiv auf die Lagerstabilität der Silicondichtungsmassen aus.

In einer zweiten, ebenfalls bevorzugten, Ausführungsform weisen die erfindungsgemäßen Fällungskieselsäuren eine niedrige modifizierte Stampfdichte und somit eine besonders gute Thixothropie auf. Hierbei ist zu beachten, daß mit der modifizierten Stampfdichte die Stampfdichte gemessen am unverdichteten Material gemeint ist. Um diese Größe auch an bereits durch Verpackung und Lagerung vorverdichtetem Materialien bestimmen zu können, ist eine Probenpräparation, wie sie im Abschnitt "Bestimmung der **modifizierten Stampfdichte"** beschrieben ist, durchzuführen. Die erfindungsgemäßen Kieselsäuren weisen eine modifizierte Stampfdichte von kleiner gleich 70 g/l, bevorzugt von 1 bis 60 g/l, besonders bevorzugt von 5 bis 55 g/l, ganz besonders bevorzugt von 10 bis 50 g/l, und insbesondere bevorzugt 20 bis 50 g/l auf. Durch ihre niedrige modifizierte Stampfdichte wird ein zusätzlich vorteilhafter Effekt der erfindungsgemäßen Fällungskieselsäuren bedingt. Die niedrige modifizierte Stampfdichte entsteht durch eine sehr lockere Packung der Kieselsäurepartikel. Das heißt, dass sich die Kieselsäurepartikel einerseits zwar berühren und leicht aneinander haften, andererseits aber so locker gepackt sind, dass große Hohlräume entstehen. Diese lockere Packung entsteht auch im Silikoncompound und führt dann zu einer hohen Thixothropie des Silikoncompounds.

In einer besonders bevorzugten Ausführungsform, in der die erfindungsgemäßen Kieselsäuren sowohl eine besonders gute Standfestigkeit als auch eine besonders gute Lagerstabilität von unvernetzten Silicondichtungsmassen

ermöglichen, weisen die erfindungsgemäßen Kieselsäuren eine ausreichende Porosität, ausgedrückt durch eine DBP-Aufnahme von 200 bis 350 g/(100 g), bevorzugt 220 bis 330 g/(100 g), ganz besonders bevorzugt 220 bis 300 g/(100 g), insbesondere bevorzugt 250 bis 320 g/(100 g) und speziell bevorzugt 280 bis 310 g/(100 g) in Kombination mit einer niedrigen modifizierten Stampfdichte von kleiner als 70 g/l, bevorzugt 1 bis 60 g/l, besonders bevorzugt 5 bis 55 g/l, ganz besonders bevorzugt 10 bis 50 g/l, und insbesondere bevorzugt 20 - 50 g/l sowie einer niedrigen Silanolgruppendichte von 0,5 bis 3,0 $SiOH/nm^2$, bevorzugt 1,0 bis 3,0 $SiOH/nm^2$ und besonders bevorzugt von 1,5 bis 2,8 $SiOH/nm^2$, auf.

Die Erfinder haben zudem festgestellt, dass es für die Standfestigkeit der Silicondichtungsmassen von besonderem Vorteil sein kann, wenn die erfindungsgemäßen Fällungskieselsäuren einen ausreichenden Anteil an feinen Partikeln, d. h. an Partikeln < 1 $\mu$m, aufweisen. Dies trifft auf alle zuvor beschriebenen Ausführungsformen zu. Daher weisen die erfindungsgemäßen Kieselsäuren im Partikelgrößenbereich < 1 $\mu$m der **volumenbezogenen Partikelverteilung** bevorzugt einen Anteil an feinen Partikeln von 5 bis 100 %, bevorzugt 10 bis 95%, besonders bevorzugt 10 bis 70 %, ganz besonders bevorzugt 15 bis 70 % auf.

Auch wurde festgestellt, dass ein zu hoher Anteil an groben Partikeln die anwendungstechnischen Eigenschaften der erfindungsgemäßen Fällungskieselsäuren negativ beeinflussen kann. Daher zeichnen sich die erfindungsgemäßen Kieselsäuren bevorzugt dadurch aus, dass bezogen auf die volumenbezogene Partikelverteilungskurve der $d_{90}$ -Wert zwischen 0,01 und 10 $\mu$m, bevorzugt zwischen 1 uns 10 $\mu$m, besonders bevorzugt zwischen 2 und 8 $\mu$m und insbesondere bevorzugt zwischen 3 und 7 $\mu$m ist.

Die Partikelverteilungen können monomodal oder bimodal, vorzugsweise bimodal sein.

Es wurde auch festgestellt, dass es für alle zuvor beschriebenen Ausführungsformen der erfindungsgemäßen Kieselsäuren besonders vorteilhaft sein kann, wenn die hydrophile Kieselsäure von vornherein möglichst wenig Feuchtigkeit mit in die Silikondichtungsmasse einbringt. Die erfindungsgemäßen Kieselsäuren können daher eine Anfangsfeuchte, ausgedrückt durch den **Trocknungsverlust,** von 0,1 - 3,0 Gew. %, bevorzugt 0,2 bis 2,5 Gew.-%, besonders bevorzugt 0,3 bis 2,0 Gew.-% und insbesondere bevorzugt 0,4 bis 1,8 Gew.-% und/oder einen **Glühverlust** von 0,1 - 3,0 Gew. %, bevorzugt 0,2 bis 3,0 Gew.-%, besonders bevorzugt 0,3 bis 2,0 Gew.-% und insbesondere bevorzugt 0,4 bis 1,8 Gew.-% aufweisen.

Schließlich wurde festgestellt, dass es für alle zuvor beschriebenen Ausführungsformen der erfindungsgemäßen Kieselsäuren besonders vorteilhaft ist, wenn die hydrophile Kieselsäure einen pH-Wert: im Bereich von 4 bis 8, bevorzugt 4,5 bis 7,5 aufweist. Wenn der pH-Wert zu hoch ist, dann kann es vorkommen, dass der Silikoncompound nach einer längeren Lagerung (z. B. nach mehreren Tagen) nicht mehr ordnungsgemäß vernetzt und klebrig bleibt.

Die genannten Vorzugsbereiche können unabhängig voneinander eingestellt werden.

Die erfindungsgemäßen Kieselsäuren können nach einem Verfahren hergestellt werden, dass die nachfolgend beschriebenen Schritte

1. Umsetzung von zumindest einem Silikat mit zumindest einem Säuerungsmittel

2. Filtration und Waschen der erhaltenen Kieselsäure

3. Trocknung der erhaltenen Kieselsäure bzw. des Filterkuchens

4. Temperung der getrockneten Kieselsäure mit einem Wirbelbettreaktor und den folgenden Teilschritten

   4a. Einfüllen der hydrophilen Kieselsäure in den Wirbelbettreaktor,

   4b. Vorheizen des Reaktors auf 300 bis 800 °C, wobei gleichzeitig der Reaktor von einem Inertgas und/oder Stickstoff-Luft-Gemisch so durchströmt wird, dass sich eine Fluidierungsgeschwindigkeit von 0,02 bis 0,06 m/s einstellt,

   4c. Einspeisung eines Gasgemisches I aus Wasserdampf und einem Inertgas, z. B. Stickstoff, oder eines Gasgemisches II aus Wasserdampf, einem Inertgas und Luft bei 300 bis 800 °C für die Dauer von 0,25 bis 6 h, wobei das Gasgemisch den Reaktor mit einer Fluidisierungsgeschwindigkeit von 0,02 bis 0,06 m/s durchströmt und die Gasgemische I und II eine Wasserdampfkonzentration von 10 bis 95 Vol.-% und im Falle des Gasgemisches II einen Sauerstoffgehalt von 0,01 bis 21 Vol.-% aufweisen,

   4d. Unterbrechung der Dampfzugabe und Austreiben des Dampfes durch ein Inertgas, z.B. Stickstoff, und/oder ein Inertgas-Luft-Gemisch bei 300 bis 800 °C, wobei das Gas bzw. Gasgemisch den Reaktor mit einer Fluidisierungsgeschwindigkeit von 0,02 bis 0,06 m/s durchströmt und im Falle der Verwendung des Inertgas-Luft-Gemisches dieses einen Sauerstoffgehalt von 0,01 bis 21 Vol.-% aufweist,

4e. Abkühlung der getemperten hydrophilen Kieselsäure auf Raumtemperatur in einer trockenen Prozessatmosphäre, wobei bei Verwendung eines Inertgas-Luft-Gemisches dieses einen Sauerstoffgehalt von 0,01 bis 21 Vol.-% aufweist,

umfasst.

Schritt 1 umfasst dabei bevorzugt die Teilschritte

1a. Herstellung einer Vorlage aus Wasser bzw. Wasser und zumindest einem Silikat und/oder einer Silikatlösung, wobei der pH-Wert der so erhaltenen Vorlage bevorzugt zwischen pH 5 und pH 10 und die Temperatur der Vorlage bevorzugt zwischen 80 und 100 °C liegt.

1b. Dosierung zumindest einem Silikat und/oder einer Silikatlösung und zumindest eines Säuerungsmittels unter Rühren bei 80 bis 100 °C in die Vorlage aus Teilschritt 1a), so lange, bis der Viskositätsanstiegspunkt erreicht ist. Dabei erfolgt die Zugabe von Silikat und/oder Silikatlösung und Säuerungsmittel besonders bevorzugt gleichzeitig und/oder so, dass der pH-Wert für die Dauer von Teilschritt 1b) konstant auf einem Wert zwischen pH 7 und pH 10 gehalten wird

1c. Stoppen der Zugabe von Silikat und/oder Silikatlösung und Säuerungsmittel und Rühren der Fällsuspension bei einer Temperatur von 80 bis 100 °C für die Dauer von 15 bis 120 min,

1d. Zugabe von Silikat und/oder Silikatlösung, so dass der pH-Wert der Fällsuspension auf pH 8 bis pH 11 erhöht wird und nach Erreichen des erhöhten pH-Wertes Rühren der Fällsuspension für die Dauer von 15 bis 90 min bei diesem pH-Wert und einer Temperatur von 80 bis 100 °C,

1e. Zugabe von Säuerungsmittel, so dass der pH-Wert der Fällsuspension auf pH 7 bis pH 10, bevorzugt bei gleichbleibender Temperatur wie in Teilschritt 1d), erniedrigt wird,

1f. Fortsetzung der Fällung gemäß Teilschritt 1b), wobei Silikat und/oder Silikatlösung und Säuerungsmittel gleichzeitig bei einer Temperatur von 80 bis 100 °C so lange zugegeben werden, bis ein Feststoffgehalt der Fällsuspension erreicht ist, der nach Durchführung von Teilschritt 1g) zum gewünschten Feststoffgehalt führt.

1g. Zugabe eines Säuerungsmittels bei einer Temperatur der Fällsuspension von 80 bis 100 °C, so dass der pH-Wert der Fällsuspension auf 2 bis 6 erniedrigt wird und der Feststoffgehalt der Fällsuspension am Ende dieses Teilschritts zwischen 30 und 70 g/l liegt.

Bevorzugt werden die erfindungsgemäßen Kieselsäuren vermahlen. Dies erfolgt besonders bevorzugt so, dass die erfindungsgemäßen Kieselsäuren in einem Schritt 3a, d. h. zwischen den Schritten 3 und 4 oder in einem Schritt 5, d. h. nach Schritt 4, oder sowohl in Schritt 3a, d. h. zwischen Schritt 3 und 4, als auch in Schritt 5, d. h. nach Schritt 4, vermahlen werden.

Alle bekannten Silikatformen kommen für die in Schritt 1) des erfindungsgemäßen Verfahrens eingesetzten Silikate bzw. Silikatlösungen in Frage. Bevorzugt handelt es sich bei den erfindungsgemäß eingesetzten Silikaten um alkalische Silikate, z. B. Natrium- oder Kaliumsilikate. Besonders bevorzugt handelt es sich in Schritt 1 um Natriumsilikat (Wasserglas). Dessen Gewichtsverhältnis von $SiO_2$ zu $Na_2O$ liegt zwischen 2 und 4, bevorzugt zwischen 3 und 3,6 und besonders bevorzugt zwischen 3,3 und 3,5. Der Gehalt an $SiO_2$ liegt zwischen 20 und 40 Gew.-%, bevorzugt zwischen 25 und 30 Gew.-%.

Unter Säuerungsmittel sind saure Verbindungen organischer oder anorganischer Natur zu verstehen, mit deren Hilfe der pH-Wert der Fällsuspension erniedrigt werden kann. Bevorzugt können anorganische Säuren wie Salzsäure, Phosphorsäure, Schwefelsäure oder Salpetersäure oder organische Säuren wie Essigsäure, Ameisensäure oder Kohlensäure bzw. Kohlendioxid eingesetzt werden. Es können sowohl verdünnte als auch konzentrierte Säuren verwendet werden. Besonders bevorzugt wird in dem erfindungsgemäßen Verfahren Schwefelsäure eingesetzt.

Zumeist sind das eingesetzte Silikat und/oder die Silikatlösung sowie Säuerungsmittel in den Teilschritten 1a) bis 1g) identisch.

Der pH-Wert der Vorlage in Teilschritt 1a) liegt bevorzugt zwischen pH 7 und pH 10, besonders bevorzugt zwischen pH 8 und pH 9. Die Temperatur der Vorlage wird auf 80 bis 100 °C, bevorzugt auf 85 bis 95 °C eingestellt.

Im Teilschritt 1b) und 1f) werden Silikat und Säuerungsmittel bevorzugt gleichzeitig zudosiert. Die Zugabe der beiden Komponenten erfolgt bevorzugt kontinuierlich gleichbleibend über die gesamte Dauer von Teilschritt 1b) und 1f). Die Temperatur bleibt während dessen bei 80 bis 100 °C, bevorzugt auf 85 bis 95 °. Die Dauer der Zugabe in Schritt 1f) erfolgt so lange, bis der am Ende von Schritt 1g) zu erreichende Feststoffgehalt erreicht ist. Die Fällung wird am

Viskositätsanstiegspunkt unterbrochen. Dieser Viskositätsanstiegspunkt entspricht dabei dem Zeitpunkt, bei dem ein starkes Ansteigen der Viskosität der Fällsuspension im Fällverlauf, vgl. dazu EP 0643015, zu beobachten ist. Während des Teilschritts 1b), in dem das Ausfällen der Kieselsäure beginnt, und Teilschritt 1f) wird der pH-Wert möglichst konstant bei einem pH-Wert zwischen pH 7 und pH 10, bevorzugt konstant bei einem pH-Wert zwischen pH 7,5 und 9,5 und ganz besonders bevorzugt bei einem pH-Wert zwischen pH 8 und 9, gehalten. Korrekturen eines abweichenden pH-Wertes erfolgen in der Regel über ein Erhöhen oder Erniedrigen der Zugabe des Säuerungsmittels, so dass eingestellte pH-Wert vorzugsweise nur um ± 0,2 pH-Einheiten, besonders bevorzugt nur um ± 0,1 pH-Einheiten schwankt.

Bei Erreichung des Viskositätsanstiegspunkts wird die Fällung unterbrochen. Im Teilschritt 1c) wird die Zugabe von Silikat und/oder Silikatlösung und Säuerungsmittel gestoppt. Die Unterbrechung erfolgt für eine Dauer von 15 bis 120 min bevorzugt von 40 bis 100 min und besonders bevorzugt von 75 bis 100 min und ganz besonders von 85 bis 95 min.

Im Teilschritt d) der speziellen Ausführungsform wird durch Zugabe von Silikat der pH-Wert der Fällsuspension auf pH 8 bis pH 11, bevorzugt auf pH 9 bis pH 11, besonders bevorzugt auf pH 9,5 bis pH 10,5, erhöht und nach Erreichen des erhöhten pH-Wertes wird die Fällsuspension für die Dauer von besser 15 bis 90 min, bevorzugt für die Dauer von 45 bis 75 min bei diesem pH-Wert und einer Temperatur von 80 bis 100 °C gerührt.

Anschließend wird im Teilschritt 1e) durch Zugabe von Säuerungsmittel der pH-Wert der Fällsuspension auf pH 7 bis pH 10, bevorzugt auf pH 7,5 bis pH 9, bei gleichbleibender Temperatur erniedrigt.

Danach wird in Teilschritt 1f) die gleichzeitige Zudosierung von Silikat und/oder Silikatlösung und Säuerungsmittel wieder aufgenommen, d. h. bis zur Erreichung des beabsichtigten Feststoffgehalts zu Ende geführt. Bevorzugt erfolgt dies bei gleichem pH-Wert, gleicher Temperatur und gleichen Dosiergeschwindigkeiten wie in Teilschritt 1b) vor der Erreichung des Viskositätsanstiegspunkts.

Durch Zugabe eines Säuerungsmittels bei einer Temperatur der Fällsuspension von 80 bis 100 °C wird in Teilschritt 1g) deren pH-Wert auf 2 bis 6, bevorzugt auf pH 3 bis 6, besonders bevorzugt auf pH 3 bis pH 4, erniedrigt. Der Feststoffgehalt der Fällsuspension am Ende dieses Teilschritts liegt zwischen 30 und 70 g/l, bevorzugt zwischen 45 und 60 g/l und ganz besonders bevorzugt zwischen 45 und 55 g/l.

Ohne in irgendeiner Weise an eine besondere Theorie gebunden zu sein, soll in der speziellen Ausführungsform des erfindungsgemäßen Verfahrens durch die zusätzlichen Teilschritte 1c) bis 1e) die im Teilschritt 1b) bis zum Viskositätsanstiegspunkt erzeugte kettenförmige Struktur der Aggregate in ihrem Zusammenhalt und damit in ihrer mechanischen Stabilität noch verstärkt werden.

Die Filtration, Verflüssigung (z. B. gemäß DE 2447613) und Lang- oder Kurzzeittrocknung der erfindungsgemäßen Kieselsäuren sind dem Fachmann geläufig und können z. B. in den in der Beschreibung genannten Dokumenten nachgelesen werden. Die Filtration und das Waschen der Kieselsäure erfolgt bevorzugt in der Art und Weise, dass die Leitfähigkeit des Endprodukts < 1000 µS/cm, bevorzugt < 500 µS/cm und besonders bevorzugt < 200 µS/cm beträgt.

Bevorzugt wird die erfindungsgemäße Kieselsäure in einem Stromtrockner, Sprühtrockner, Etagentrockner, Bandtrockner, Drehrohrtrockner, Flash-Trockner, Spin-Flash-Trockner oder Düsenturmtrockner getrocknet. Diese Trocknungsvarianten schließen den Betrieb mit einem Atomizer, einer Ein- oder Zweistoffdüse oder einem integrierten Fließbett ein. Die Sprühtrocknung kann z. B. gemäß US 4094771 durchgeführt werden.

Wird als Trocknungsart die Sprühtrocknung gewählt, so ist der Filterkuchen zuvor zu redispergieren. Die Redispergierung erfolgt vorzugsweise in Wasser bzw. wässriger Säure so, dass die Dispersion einen pH-Wert von 4 - 7 aufweist Dabei ist darauf zu achten, dass die Kieselsäuredispersion nach beendeter Redispergierung einen Feststoffgehalt von 5 bis 18, bevorzugt 8 - 13 Gew.-%, besonders bevorzugt 9 bis 11% aufweist und dass bei der Redispergierung keine zu starken Scherkräften auf die Kieselsäure einwirken. Dies kann z. B. durch Umrühren mit einer Drehzahl von < 1000 U/min erreicht werden, wobei raumübergreifend und nicht punktuell gerührt werden sollte. Bevorzugt wird die redispergierte Kieselsäuredispersion so in den Sprühtrockner dosiert, das sich am Trockneraustritt eine Temperatur von 100 bis 170 °C, bevorzugt 130 - 160 °C einstellt.

Um die geringe Feuchtigkeitsaufnahme sicherzustellen ist neben der Fällung gemäß den Vorgaben von Schritt 1b) und 1f) und der pH-Wert-Variation in den Schritten 1c) bis 1e) auch eine Temperung notwendig. Durch die Kombination dieser Maßnahmen wird die Struktur und die Oberfläche der erfindungsgemäßen Kieselsäuren derart optimiert, dass die gewünschten Eigenschaften erzielt werden. Die Temperung in Schritt 4 kann batchweise oder kontinuierlich durchgeführt werden. Dabei ist darauf zu achten, dass während der Temperung eine homogene Temperaturverteilung und eine homogene Prozessgasathmosphäre sichergestellt wird, so dass alle Kieselsäurepartikel gleichen Bedingungen ausgesetzt werden. Das Prozeßgas muss eine ausreichende Wasserdampfkonzentration aufweisen. Bevorzugt beträgt die Wasserdampfkonzentration 10 bis 95 Vol.-%, besonders bevorzugt 40 bis 90 Gew.-% , ganz besonders bevorzugt 50 bis 90 Gew. %.

Insbesondere bei Verwendung eines Drehrohrreaktors ist darauf zu achten, dass überall gleiche Temperaturen herrschen, d. h. keine "Kühlzonen" existieren, in denen der Wasserdampf kondensieren könnte. Durch den kondensierten Wasserdampf kann es zu einer Verklumpung der Kieselsäuren kommen. Die besonderen Bedingungen bei der erfindungsgemäßen Temperung stellen daher auch sicher, dass eine bereits vor der Temperung vermahlene Kieselsäure nach der Temperung nicht noch einmal vermahlen werden muss, d. h. keine Verbackungen oder Verklumpungen gebildet

werden, die durch eine Vermahlung nach der Temperung wieder entfernt werden müssten.

Unter einem Wirbelbett ist Folgendes zu verstehen:

Wenn auf waagerechten, perforierten Böden lagerndes feinkörniges Schüttgut von unten von Gasen durchströmt wird, stellt sich unter bestimmten Strömungsbedingungen ein Zustand ein, der dem einer kochenden Flüssigkeit ähnelt; die Schicht wirft Blasen auf; die Teilchen des Schüttgutes befinden sich innerhalb der Schicht in einer ständigen, wirbelnden Auf- und Abbewegung und bleiben so gewissermaßen in der Schwebe. Man spricht deshalb auch von Schwebebett, Wirbelbett, Fließbett sowie von Fluidisieren. Die damit verbundene große Oberfläche des Wirbelgutes erleichtert auch das Trocknen und Tempern von Festkörpern.

Es ist wichtig, dass während der Temperung alle Kieselsäurepartikel annähernd der gleichen oder bevorzugt der gleichen Temperatur und dem gleichen Prozessgas ausgesetzt sind. Die Temperaturunterschiede zwischen den heißesten und kältesten Stellen sollen möglichst klein sein. Deshalb darf auch die Temperatur der Filterkerzen nicht unter der Produkttemperatur liegen.

Dabei wird nach dem Einfüllen der hydrophilen Kieselsäure in den Wirbelbettreaktor (Teilschritt 4a)) der Reaktor im Teilschritt 4b) auf eine Betriebstemperatur von 300 bis 800 °C, bevorzugt von 350 bis 700 °C und besonders bevorzugt von 400 bis 650 °C aufgeheizt. Während des Aufheizvorgangs wird der Reaktor von einem Inertgas, bevorzugt Stickstoff und/oder einem Gemisch aus einem Inertgas und trockener Luft so durchströmt, dass sich eine Fluidisierungsgeschwindigkeit von 0,02 bis 0,06 m/s einstellt.

Nach Erreichen der Betriebstemperatur wird in Teilschritt 4c) ein Gasgemisch I aus Wasserdampf und einem Inertgas, bevorzugt Stickstoff, oder ein Gasgemisch II aus Wasserdampf, einem Inertgas und Luft für die Dauer von 0,25 bis 6 h, bevorzugt 0,5 bis 5 h, besonders bevorzugt 1 bis 4 h, ganz besonders bevorzugt 2 bis 4 h durch den Reaktor geleitet. Die Fluidisierungsgeschwindigkeit des Gasgemischs beträgt 0,02 bis 0,06 m/s. Die Gasgemische I und II weisen eine Wasserdampfkonzentration von 10 bis 95 Vol.-%, bevorzugt 40 bis 90 Gew.-%, ganz besonders bevorzugt 50 bis 90 Gew. % und im Falle des Gasgemisches II einen Sauerstoffgehalt von 0,01 bis 21 Vol.-% auf.

Die Techniken für eine optionale Vermahlung der erfindungsgemäßen Kieselsäuren sind dem Fachmann bekannt und kann z. B. in *Ullmann, 5. Auflage, B2, 5-20* nachgelesen werden. Bevorzugt werden für die Vermahlung der erfindungsgemäßen Kieselsäuren in Schritt 3a) und/oder in Schritt 5) Prallmühlen oder Gegenstrahlmühlen eingesetzt. Die Mahlparameter werden bevorzugt so gewählt, dass das vermahlene Produkt im Bereich kleiner 1 $\mu$m der volumenbezogenen Partikelverteilung einen Anteil an feinen Partikeln von 5 bis 100 %, bevorzugt 10 bis 95%, besonders bevorzugt 15 bis 95 %, ganz besonders bevorzugt 20 bis 90 % und insbesondere bevorzugt von 40 bis 80 % und/oder einen $d_{90}$ -Wert der volumenbezogene Partikelverteilungskurve zwischen 0,01 und 10 $\mu$m aufweist.

Die erfindungsgemäßen Kieselsäuren können in Dichtungsmassen, insbesondere in Siliconkautschuk bzw. Silicondichtungsmassen und besonders bevorzugt in RTV-1K-Dichtungsmassen verwendet werden. Die Anwendung ist möglich in verschiedenen Vernetzungssystemen, z. B. acetoxy-vernetzend, alcoxy-vernetzend und oxim-vernetzend. Diese Systeme finden Anwendung z.B. in der Bauindustrie als Fugendichtungsmassen, in der Automobilindustrie als Kleb- und Dichtstoff und als Beschichtungsmassen für z.B. Textilgewebe.

Die Reaktionsbedingungen und die physikalisch/chemischen Daten der erfindungsgemäßen Fällungskieselsäuren werden mit den folgenden Methoden bestimmt:

**Bestimmung des Feststoffgehalts von Filterkuchen**

Nach dieser Methode wird der Feststoffgehalt von Filterkuchen durch Entfernen der flüchtigen Anteile bei 105 °C bestimmt.

Dazu werden in eine trockene, tarierte Porzellanschale (Durchmesser 20 cm) 100,00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 $\pm$ 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.

Man bestimmt den Feststoffgehalt (FG) in % gemäß

$$FG = A / E * 100 \%,$$

mit A = Auswaage in g und E = Einwaage in g.

## Bestimmung des Feststoffgehalts von Fällsuspensionen

Der Feststoffgehalt der Fällsuspension wird gravimetrisch nach Filtration der Probe bestimmt.

100,0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. Schleicher & Schuell) in einer Porzellannutsche abgenutscht, aber nicht trockengesaugt, um Rissbildung des Filterkuchens zu verhindern. Anschließend wäscht man den Filterkuchen mit 100,0 ml destillierten Wasser. Der ausgewaschene Filterkuchen wird in eine tarierte Porzellanschale überführt und bei 105 ± 2 °C in einem Trockenschrank bis zur Gewichtskonstanz getrocknet. Nach Abkühlung auf Raumtemperatur wird das Gewicht der getrockneten Kieselsäure ($m_{Probe}$) ermittelt.

Der Feststoffgehalt bestimmt sich gemäß:

$$\text{Feststoffgehalt in g/l} = (m_{Probe} \text{ in g}) / (V_{Suspension} \text{ in l}).$$

## Bestimmung des Feststoffgehalts von Kieselsäurespeise

Die Kieselsäurespeise wird im IR-Trockner bis zur Gewichtskonstanz getrocknet. Der Trocknungsverlust besteht überwiegend aus Wasserfeuchtigkeit.

In eine tarierte Aluminiumschale werden 2,0 g Kieselsäurespeise eingefüllt und der Deckel der IR-Trockeneinheit (Fa. Mettler, Typ LP 16) geschlossen. Nach Drücken der Starttaste beginnt die Trocknung der Suspension bei 105 °C, die automatisch beendet wird, wenn die Gewichtsabnahme pro Zeiteinheit den Wert von 2 mg/(120 s) unterschreitet.

Die Gewichtsabnahme in % wird vom Gerät bei Anwahl des 0-100 %-Modus direkt angezeigt. Der Feststoffgehalt ergibt sich gemäß

$$\text{Feststoffgehalt in \%} = 100\ \% - \text{Gewichtsabnahme in \%}.$$

## Bestimmung des pH-Wertes

Die Bestimmung des pH-Wertes der Kieselsäure erfolgt als 5%ige wässrige Suspension bei Raumtemperatur in Anlehnung DIN EN ISO 787-9. Gegenüber den Vorgaben dieser Norm wurden die Einwaagen verändert (5,00 g Kieselsäure auf 100 ml entionisiertes Wasser).

## Bestimmung der elektrischen Leitfähigkeit

Die Bestimmung der elektrischen Leitfähigkeit von Kieselsäure wird als 4%ige wässrige Suspension bei Raumtemperatur in Anlehnung an DIN EN ISO 787-14 durchgeführt.Gegenüber den Vorgaben dieser Norm wurden die Einwaagen verändert (4,00 g Kieselsäure auf 100 ml entionisiertes Wasser).

## Bestimmung der Feuchte oder des Trockungsverlustes

Die Feuchte von Kieselsäure wird gemäß ISO 787-2 nach 2-stündiger Trocknung in einem Umlufttrockenschrank bei 105 °C bestimmt. Dieser Trocknungsverlust besteht überwiegend aus Wasserfeuchtigkeit.

## Bestimmung des Glühverlustes

Nach dieser Methode wird der Gewichtsverlust von Kieselsäure in Anlehnung an DIN EN ISO 3262-1 bei 1000°C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung der Feuchte bzw. des Trockenverlusts" in Anlehnung an DIN EN ISO 787-2 ermittelt.

0.5 g der pulverförmigen, kugelförmigen oder granulären Kieselsäure werden auf 0.1 mg genau in einen vorgeglühten, tarierten Porzellantiegel eingewogen (Einwaage E). Die Probe wird 2 h bei 1000 ± 50 °C in einem Muffelofen erhitzt. Anschließend wird der Porzellantiegel in einem Exsikkatorschrank mit Kieselgel als Trocknungsmittel auf Raumtemperatur abgekühlt. Die Auswaage A wird gravimetrisch bestimmt.

Man erhält den Glühverlust (DIN) GV in % gemäß

$$GV = (1 - A / F) * 100.$$

F bedeutet die korrigierte Einwaage bezogen auf getrocknete Substanz in g und errechnet sich nach

$$F = E * (1 - TV / 100).$$

In den Berechnungen bedeuten A = Auswaage in g, E = Einwaage in g und TV = Trockenverlust in %.

**Bestimmung der BET-Oberfläche**

Die spezifische Stickstoff-Oberfläche (im folgenden BET-Oberfläche genannt) der pulverförmigen, kugelförmigen oder granulären Kieselsäure wird in Anlehnung an ISO 5794-1/Annex D mit dem Gerät TRISTAR 3000 (Fa. Micromeritics) nach der Multipointbestimmung gemäß DIN ISO 9277 ermittelt.

**Bestimmung der CTAB-Oberfläche**

Die Methode beruht auf der Adsorption von CTAB (N-Hexadecyl-N,N,N-trimethylammoniumbromid) an der "äußeren" Oberfläche der Kieselsäure in Anlehnung an die ASTM 3765, bzw. NFT 45-007 (Kapitel 5.12.1.3).

Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23 - 25 °C um das Auskristallisieren von CTAB zu verhindern. Der Rücktitration liegt die folgende Reaktionsgleichung zu Grunde:

$$\underset{\text{NDSS}}{(C_{20}H_{37}O_4)SO_3Na} + \underset{\text{CTAB}}{BrN(CH_3)_3(C_{16}H_{33})} \Rightarrow (C_{20}H_{37}O_4)SO_3N(CH_3)_3(C_{16}H_{33}) + NaBr$$

Geräte

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550
Titrierbecher 100 ml aus Polypropylen
Titrierglasgefäß, 150 ml mit Deckel
Druckfiltrationsgerät, 100 ml Inhalt
Membranfilter aus Cellulosenitrat, Porengröße 0,1 μm,
47 mm ∅, z. B. Whatman (Best. Nr. 7181-004)

Reagenzien

Die Lösungen von CTAB ($C_{CTAB}$ = 0,015 mol/l in entionisiertem Wasser) und NDSS (Konzentration = 0,00423 mol/l in entionisiertem Wasser) werden gebrauchsfertig bezogen (Fa. Bernd Kraft GmbH, 47167 Duisburg: Bestell-Nr. 6056.4700 CTAB-Lösung der Konzentration 0,015 mol/l;
Bestell-Nr. 6057.4700 NDSS-Lösung 0,00423 mol/l), bei 25 °C aufbewahrt und innerhalb von einem Monat aufgebraucht.

Durchführung

**1. Blindtitration**

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %).

Es werden genau 5.00 ml CTAB-Lösung in einen Titrierbecher pipettiert und man fügt 50,0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_A$ an NDSS-Lösung in

ml. Jede Titration ist als Dreifachbestimmung auszuführen.

**2. Adsorption**

10,0 g der pulverförmigen, kugelförmigen oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. Krups, Model KM 75, Artikel Nr. 2030-70) 30 Sekunden lang zerkleinert. Genau 500,0 mg der zerkleinerten Probe (Einwaage E) werden in ein 150 ml Titriergefäß mit Magnetrührstäbchen überführt und es werden genau 100,0 ml CTAB-Lösung ($T_1$) zudosiert. Das Titriergefäß wird mit einem Deckel verschlossen und mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0,1 mol/l) auf einen Wert von 9 ± 0,05 eingestellt.

Es erfolgt eine 4-minütige Beschallung der Suspension in dem Titriergefäß in einem Ultraschallbad (Fa. Bandelin, Sonorex RK 106 S, 35 kHz, 100 W Effektiv bzw. 200 W Spitzenleistung) bei 25 °C. Anschließend erfolgt eine umgehende Druckfiltration durch einen Membranfilter bei einem Stickstoffdruck von 1,2 bar. Der Vorlauf von 5 ml wird verworfen.

**3. Titration**

5,00 ml des übrigen Filtrats werden in einen 100 ml Titrierbecher pipettiert und mit entionisiertem Wasser auf 50,00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_B$ an NDSS-Lösung in ml. Jede Titration ist als Dreifachbestimmung auszuführen.

Berechnung

$$CTAB(nicht\ feuchtekorrigiert) = \frac{V_A - V_B}{V_A} * \frac{C_{CTAB} * M_{CTAB} * T_1 * P}{E}$$

| | |
|---|---|
| $V_A$ = | Verbrauch an NDSS-Lösung in ml bei der Titration der Blindprobe |
| $V_B$ = | Verbrauch an NDSS-Lösung in ml bei Verwendung des Filtrats |
| $C_{CTAB}$ = | Konzentration der CTAB-Lösung in mol/l |
| $M_{CTAB}$ = | Molmasse von CTAB = 364,46 g/mol |
| $T_1$ = | Zugegebene Menge an CTAB-Lösung in l |
| P = | Platzbedarf von CTAB = 578,435 $m^2$/g |
| E = | Einwaage an Kieselsäure |

Die CTAB-Oberfläche wird auf die wasserfreie Kieselsäure bezogen, weshalb die folgende Korrektur durchgeführt wird.

$$CTAB = \frac{CTAB(nicht\ feuchtekorrigiert)\ in\ m^2/g * 100\,\%}{100\,\% - Feuchte\ in\ \%}$$

Die Feuchte der Kieselsäure wird gemäß der beschriebenen Methode "Bestimmung der Feuchte" ermittelt.

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt:

12,50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 1 bis 3,15 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das

Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0,6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so daß der Verbrauch an DBP in ml abgelesen werden kann.

Die DBP-Aufnahme wird in g/(100 g) angegeben und anhand der folgenden Formel berechnet:

$$DBP = \frac{V * D * 100}{E} * \frac{g}{100\,g} + K$$

mit

DBP = DBP-Aufnahme in g/(100 g)
*V* = Verbrauch an DBP in ml
*D* = Dichte von DBP in g/ml (1,047 g/ml bei 20 °C)
*E* = Einwaage an Kieselsäure in g
*K* = Korrekturwert gemäß Feuchtekorrekturtabelle in g/(100 g)

Die DBP-Aufnahme ist für die wasserfreie, getrocknete Kieselsäure definiert. Bei Verwendung von feuchten Fällungskieselsäuren ist der Korrekturwert K für die Berechnung der DBP-Aufnahme zu berücksichtigen. Dieser Wert kann anhand der folgenden Korrekturtabelle ermittelt werden, z. B. würde ein Wassergehalt der Kieselsäure von 5,8 % einen Zuschlag von 33 g/(100 g) für die DBP-Aufnahme bedeuten. Die Feuchte der Kieselsäure wird gemäß der Methode "Bestimmung der Feuchte bzw. des Trocknungsverlusts" ermittelt.

Feuchtekorrekturtabelle für Dibutylphthalataufnahme (wasserfrei)

| | .% Feuchte | | | | |
|---|---|---|---|---|---|
| % Feuchte | ,0 | ,2 | ,4 | ,6 | ,8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der Silanolgruppendichte**

Zunächst wird die Feuchte der Kieselsäureprobe gemäß der "Bestimmung der Feuchte oder des Trockungsverlustes" ermittelt. Danach werden 2 - 4 g der Probe (auf 1 mg genau zu bestimmen) in eine druckdichte Glasapparatur (Glaskolben mit Tropftrichter) mit angeschlossener Druckmessung überführt. Dort wird sie 1 h bei 120° im Vakuum (< 1 hPa) getrocknet. Bei Raumtemperatur werden dann aus einem Tropftrichter ca. 40 ml einer entgasten 2%igen Lösung von $LiAlH_4$ in Diglyme zugetropft. Evtl. wird weitere Lösung zugetropft, bis keine weitere Druckzunahme zu beobachten ist. Die Druckzunahme durch den bei der Reaktion des $LiAlH_4$ mit den Silanolgruppen der Kieselsäure entstehenden Wasserstoff wird über die Druckmessung (bei durch vor der Messung erfolgter Kalibrierung der Apparatur bekanntem Volumen) auf ≤ 1 hPa genau bestimmt. Aus der Druckzunahme kann über die Allgemeine Gasgleichung auf die Silanolgruppenkonzentration der Kieselsäure zurückgerechnet werden, wobei die Feuchte der Kieselsäure zu berücksichtigen ist. Der Einfluss des Dampfdrucks des Lösungsmittels ist dabei entsprechend zu korrigieren. Aus der Silanolgruppenkonzentration errechnet sich wie folgt die:

$$\text{Silanolgruppendichte} = \frac{\text{Silanolgruppenkonzentration}}{\text{BET} - \text{Oberfläche}}$$

25

**Bestimmung der Partikelgrößenverteilung mittels Laserbeugung**

Die Bestimmung der Partikelverteilung erfolgt nach dem Prinzip der Laserbeugung auf einem Laserdiffraktometer (Fa. Horiba, LA-920).

Zunächst wird die Kieselsäureprobe in 100 ml Wasser ohne Zusatz von Dispergieradditiven in einem 150 ml Becherglas (Durchmesser: 6 cm) so dispergiert, dass eine Dispersion mit einem Gewichtsanteil von 1 Gew.-% $SiO_2$ entsteht. Diese Dispersion wird danach mit einem Ultraschallfinger (Dr. Hielscher UP400s, Sonotrode H7) über einen Zeitraum von 5 min intensiv (300 W, nicht gepulst) dispergiert. Dafür ist der Ultraschallfinger so anzubringen, dass dessen unteres Ende bis ca. 1 cm über dem Boden des Becherglases eintaucht. Unmittelbar im Anschluss an die Dispergierung wird von einer Teilprobe der mit Ultraschall beanspruchten Dispersion mit dem Laserdiffraktometer (Horiba LA-920) die Partikelgrößenverteilung bestimmt. Für die Auswertung mit der mitgelieferten Standardsoftware des Horiba LA-920 ist ein Brechungsindex von 1,09 zu wählen.

Alle Messungen erfolgen bei Raumtemperatur. Die Partikelgrößenverteilung sowie die relevanten Größen wie z. B. die Partikelgröße $d_{90}$ werden vom Gerät automatisch berechnet und grafisch dargestellt. Es sind die Hinweise in der Bedienungsanleitung zu beachten.

**Bestimmung des Kontaktwinkels**

Der Kontaktwinkel wird wie in W.T. Yen, R.S. Chahal, T. Salman, Can. Met. Quart., Vol. 12, Nr. 3, 1973 beschrieben bestimmt.

**Bestimmung der modifizierten Stampfdichte**

Bei der "herkömmlichen" Stampfdichtebestimmung nach DIN EN ISO 787-11 kann das Messergebnis dadurch verfälscht werden, dass die Kieselsäure bereits eine Vorverdichtung z. B. beim Abpacken erfahren hat. Um dies auszuschließen, wird für die erfindungsgemäßen Kieselsäuren eine "modifizierte Stampfdichte" bestimmt.

Eine mit einem Rundfilter (z.B. Typ 598, Fa. Schleicher + Schüll) versehene Porzellannutsche (Nenngröße 110, Durchmesser = 12 cm, Höhe = 5,5 cm) wird bis ca. 1 cm unter den oberen Rand locker mit Kieselsäure gefüllt und mit elastischer Folie (Parafilm®) abgedeckt. Die Form und Ausmaße der elastischen Folie sind so zu wählen, dass diese möglichst vollständig mit dem Rand der Porzellannutsche abschließt. Die Nutsche wird auf eine Saugflasche gesetzt und anschließend wird für die Dauer von 5 min ein Vakuum von -0,7 bar angelegt. Dabei wird die Kieselsäure durch die angesaugte Folie gleichmäßig kompaktiert. Danach wird vorsichtig belüftet und die entstandene Kieselsäureplatte aus der Nutsche durch Stürzen in eine Porzellanschale entfernt.

Das leicht vorzerkleinerte Material wird über eine Zentrifugalmühle (ZM 1, Fa. Retsch, 0,5 mm Siebeinsatz, Geschwindigkeitsstufe 1, ohne Zyklon, ohne inneren Trichtereinsatz) mit innerer Auffangschale gleichmäßig (die Kieselsäure (Edukt) wird langsam - Spatel für Spatel - in die Mühlenaufgabe gegeben, die innere Produkt-Auffangschale soll nie ganz voll werden) redispergiert (im Sinne eines Kieselsäure/Luft Aerosols). Dabei darf die Stromaufnahme der Mühle den Wert von 3 Ampere nicht überschreiten. Bei diesem Vorgang handelt es sich weniger um eine klassische Vermahlung, als um ein definiertes Auflockern der Kieselsäurestruktur (von z. B. luftstrahlvermahlenen Kieselsäuren), da der Energieeintrag hier wesentlich schwächer ist als bei einer Strahlvermahlung.

5 g des so erhaltenen Materials werden in den 250 ml-Messzylinder des Stampfvolumeters (Typ STAV 2003, Fa. Engelsmann) auf 0,1 g genau eingewogen. In Anlehnung an DIN ISO 787-11 wird nach 1250maligem Aufstampfen das resultierende Volumen der Kieselsäure in ml an der Skala abgelesen.

$$\text{Modifizierte Stampfdichte in } [g/l] = \frac{5\,g}{\text{Stampfvolumen in } [ml]} \times \frac{1000\,ml}{1\,l}$$

**Bestimmung der Gleichgewichtsfeuchte bei 70 % r.F. und 20 °C**

Die Bestimmung der Gleichgewichtsfeuchte einer Kieselsäure erfolgt nach dem Prinzip der dynamischen Wasserdampfsorption. Dabei wird die Gewichtszunahme bei der Adsorption von Wasser an der Kieselsäureoberfläche bzw. die Gewichtsabnahme bei der Desorption bestimmt (Gerät: DVS 1000, Fa. SMS). Details zur Durchführung sind in der Bedienungsanleitung beschrieben. Unter Umständen beobachtet man eine Hysterese zwischen der Ad- und der Desorptionskurve.

Die Messung erfolgt bei 20 °C. Zu Beginn wird über 10 - 50 mg einer Kieselsäureprobe ein trockener Luftstrom (0 % r.F.) bis zur Gewichtskonstanz der Probe geleitet. Danach wird die Feuchte des Luftstroms in Schritten von ca. 10 % erhöht bis zu einer maximalen Luftfeuchte von 97 - 100 %. Nach jeder Erhöhung der Luftfeuchte wird gewartet, bis sich die Gewichtskonstanz der Probe eingestellt hat (Kriterium: dm/dt < 0,0005 %/min). Als Gleichgewichtsfeuchte (20 °C / 70 %) wird die prozentuale Gewichtszunahme (bezogen auf die trockene Probe bei 0 % r.F.) angegeben, die sich bei 70 % r.F. des Luftstroms während der Adsorptionsphase einstellt.

Die folgenden Beispiele sollen die Erfindung näher erläutern, ohne ihren Umfang zu beschränken.

Das an verschiedenen Stellen in der nachfolgenden Vorschrift des Beispiels 1 eingesetzte Wasserglas und die Schwefelsäure werden wie folgt charakterisiert:

| | |
|---|---|
| Wasserglas: | Dichte 1,348 kg/l, 27,0 Gew.-% $SiO_2$, 8,05 Gew.-% $Na_2O$ |
| Schwefelsäure: | Dichte 1,83 kg/l, 94 Gew.-% |

**Beispiel 1:**

In einem 2 $m^3$ Fällbehälter (Durchmesser 160 cm) mit Schrägboden, MIG-Schrägblattrührsystem und Ekato-Fluid-Scherturbine werden 1500 l entionisiertes Wasser vorgelegt und auf 90 °C aufgeheizt. Nach Erreichen der Temperatur werden für die Dauer von 52 min Wasserglas mit einer Dosierrate von 3,52 kg/min und Schwefelsäure mit einer Dosierrate von 0,47 kg/min unter Rühren zudosiert, bis der Viskositätsanstiegspunkt erreicht ist. Die Dosierrate der Schwefelsäure ist evtl. so zu korrigieren, dass während dieser Zeitdauer ein pH-Wert von 8,5 eingehalten wird. Anschließend wird die Dosierung von Wasserglas und Schwefelsäure für die Dauer von 90 min unterbrochen. Die Fällsuspension wird in dieser Zeit bei 90 °C gerührt. Nach der Unterbrechung wird mittels Zugabe von Wasserglas der pH-Wert auf 10 innerhalb von 20 min angehoben und für die Dauer von 60 min auf diesem Niveau gehalten. Die Fällsuspension wird währenddessen weiter bei 90 °C gerührt. Anschließend wird durch Zugabe von Schwefelsäure der pH-Wert innerhalb von 5 min wieder auf 8,5 erniedrigt. Nun werden unter Rühren bei 90 °C gleichzeitig Wasserglas mit einer Dosierrate von 3,52 kg/ h und Schwefelsäure mit einer Dosierrate von 0,47 kg/h so lange zugegeben, bis sich in der Fällsuspension ein Feststoffgehalt von ca. 50 g/l einstellt.

Danach wird die Wasserglasdosierung unter Beibehaltung der Temperatur abgeschaltet und bei gleicher Dosierrate der Schwefelsäure wird die Fällsuspension auf pH 3 angesäuert.

Die Fällsuspension weist einen Feststoffgehalt von ca. 50 g/l auf.

Die erhaltene Suspension wird mit einer Membranfilterpresse filtriert und der Filterkuchen mit entionisiertem Wasser gewaschen, bis im Waschwasser eine Leitfähigkeit von < 1 mS/cm festzustellen ist. Der Filterkuchen liegt dann mit einem Feststoffgehalt von < 20 % vor.

Vor der Trocknung mittels Sprühtrockner wird der Filterkuchen mit entionisiertem Wasser auf einen Feststoffgehalt von 8 - 10 % redispergiert, wobei darauf zu achten ist, dass er dabei keinen starken Scherkräften ausgesetzt wird.

Die Eindosierung des verflüssigten Filterkuchens in den Sprühtrockner erfolgt so, dass die am Trockneraustritt gemessene Temperatur ca. 150 °C beträgt.

Anschließend wird das Material in einem Wirbelbettreaktor (Wirbelbetthöhe des expandierten Wirbelbettes ca. 1,5 m, Wirbelbettdurchmesser ca. 0,5 m) behandelt. Dazu sind die folgenden Bedingungen einzuhalten:

Zunächst werden 30 kg des sprühgetrockneten Pulver in den Wirbelbettreaktor mit Fluidisierungsboden gefüllt. Der Fluidisierungsboden wird von einem Gasgemisch aus trockenem Stickstoff und trockener Luft durchströmt. Diese beiden Gase werden vor dem Eintritt in den Reaktor so dosiert, dass ein resultierender Sauerstoffgehalt von 6 Vol.-% nicht überschritten wird und dass sich eine Fluidisierungsgeschwindigkeit im Reaktor von 0,05 m/s ergibt. Der Reaktor wird nun von Raumtemperatur auf 450 °C erhitzt. Die Gasflüsse des Fluidisierungsgases sind in der Aufheizphase so zu regeln, dass die Fluidisierungsgeschwindigkeit im Reaktor von 0,05 m/s konstant bleibt.

Nach dem Erreichen von 450 °C wird für die Dauer von 3 h ein vorgeheiztes Gasgemisch von Wasserdampf, Stickstoff und Luft in den Reaktor eingespeist. Das Mischen der drei Komponenten erfolgt derart, das sich eine Wasserdampfkonzentration von 50 % und ein Sauerstoffgehalt von 3 % einstellt. Stickstoff- und Luftmengen werden so angepasst, dass wieder eine Fluidgasgeschwindigkeit von 0,05 m/s entsteht.

Danach wird die Dampfzugabe unterbrochen. Stickstoff und Luftmengen werden so adaptiert, dass wieder eine

Fluidisierungsgeschwindigkeit von 0,05 m/s und ein Sauerstoffgehalt von ca. 6% resultiert.

Nachdem nach Unterbrechung der Dampfzufuhr mindestens das fünffache Volumen an trockenem Prozessgas durch den Wirbelbettreaktor geleitet wurde, wird das Produkt in einer trockenen Prozessgasatmosphäre auf Raumtemperatur abgekühlt. Das Abkühlen findet unter Fluidisierung in einem Stickstoff-Luft-Gemisch statt, in dem der Sauerstoffgehalt ca. 6 % beträgt. In der Abkühlphase ist besonders darauf zu achten, dass jetzt kein Wasserdampf mehr anwesend ist.

Nach der Wirbelbettbehandlung wird das Material auf einer Fließbettgegenstrahlmühle AFG 50, der Firma Alpine möglichst fein vermahlen. Die chemisch-physikalischen Daten des Beispiels 1 sind in Tabelle 1 aufgelistet.

**Vergleichsbeispiele 1 - 2**

Folgende kommerziell erhältlichen hydrophile Kieselsäuren wurden analytisch untersucht (s. Tabelle 1) und in Beispiel 4 in Dichtungsmassen eingearbeitet:
Vergleichsbeispiel 1: Siloa™ 72 X (Fa. Rhodia AG)
Vergleichsbeispiel 2: Ultrasil® VN 3 (Degussa AG)

Tabelle 1

| | | **Beispiel 1** | Vergleichsbeispiel 1 | Vergleichsbeispiel 2 |
|---|---|---|---|---|
| BET | $m^2/g$ | 176 | 167 | 170 |
| CTAB | $m^2/g$ | 187 | 156 | 153 |
| DBP | g/100g | 296 | 261 | 222 |
| pH-Wert | - | 7,0 | 5,8 | 6,4 |
| Trocknungsverlust | % | 1,6 | 2,4 | 5,5 |
| Glühverlust | % | 1,3 | 2,5 | 4,2 |
| Silanolgruppendichte | $SiOH/nm^2$ | 2,729 | 3,823 | 3, 822 |
| Modifizierte Stampfdichte | g/l | 47 | 72 | 97 |
| Anteil feiner Partikel < 1 µm [1)] | % | 15,5 | 0,0 | 0,0 |
| Art der Partikelverteilung | | Bimodal | Monomodal | Monomodal |
| Gleichgewichtsfeuchte[2)] | % | 3,5 | 5,2 | 8,7 |
| $d_{90}$-Wert der volumenbezogenen Partikelverteilung | µm | 5,76 | 14,0 | 24, 17 |
| Verhalten der Kieselsäure gegenüber Wasser | | Hydrophil | Hydrophil | Hydrophil |
| [1)] bei 5 min Ultraschall mit 300 Watt<br>[2)] bei 20 °C und 70 % r.F. | | | | |

**Beispiel 2: Anwendungstechnische Prüfungen**

**2.1 Herstellung von acetatvernetzenden RTV-1K-Silicondichtungsmassen mit Fällungskieselsäuren**

Die für die Herstellung der nachfolgenden Formulierung benötigten Mengen sind in Tabelle 2 angegeben. Während der Herstellung ist mittels Leitungswasser so zu kühlen, dass sich die Formulierung nicht wesentlich über Raumtemperatur erwärmt. Die Herstellung erfolgt bei Raumtemperatur und bei einer relativen Luftfeuchte von 40 bis 60 %.

In einen Planeten-Dissolver (Fa. H. Linden, Typ LPMD 2SP) ausgestattet mit einem 2 1-Rührgefäß mit Doppelmantel, Kühlwasseranschluss und unabhängig voneinander steuerbarem Planeten- und Dissolverantrieb, werden Siliconpolymer, Weichmacher (Siliconöl) und Vernetzer eingewogen und 1 min bei einer Geschwindigkeit von 50 $min^{-1}$ (Planetenantrieb) und 500 $min^{-1}$ (Dissolverantrieb) homogenisiert. Anschließend wird der Katalysator zugegeben und 15 min unter $N_2$-Atmosphäre bei gleichbleibenden Geschwindigkeiten des Planeten- und Dissolverantriebs homogenisiert. Danach werden der Stabilisator und die Kieselsäure ebenfalls bei gleichbleibenden Geschwindigkeiten eingearbeitet. Sobald die Kieselsäure vollständig benetzt ist, wird ein Vakuum von ca. 200 mbar angelegt und 10 min bei 100

$min^{-1}$ des Planetenrührwerks und 2000 $min^{-1}$ des Dissolvers dispergiert.

Sofort nach Beendigung der Dispergierung wird das Rührgefäß mit Stickstoff belüftet. Mit einer Fasspresse wird die Dichtungsmasse möglichst schnell in Aluminiumtuben (Kartuschen) abgefüllt.

**2.2 Herstellung von Vulkanisaten aus RTV-1K**

Um die anwendungstechnischen Eigenschaften von RTV-1K-Silicondichtungsmassen zu prüfen, in denen die erfindungsgemäßen Kieselsäuren eingesetzt werden, müssen aus den zuvor hergestellten Dichtungsmassen Vulkanisate erzeugt werden. Diese Vulkanisate werden zu Prüfkörpern verarbeitet. Dazu wird zunächst die Silicondichtungsmasse in ausreichender Menge auf einer glatten Auflageplatte aufgebracht und mit einem Rakel (Spalthöhe: 2 mm) zu einem Streifen vom 2 mm Höhe, ca. 80 mm Breite und einer Länge von ca. 300 mm glatt gestrichen. Dabei ist darauf zu achten, dass sich keine Luftblasen bilden. Aus diesen Siliconstreifen werden dann die für die jeweilige Prüfung notwendigen Formkörper ausgestanzt. Die Auflageplatte sollte aus Polypropylen, Polyethylen, Teflon oder einem anderen Kunststoff bestehen, von dem sich die vulkanisierte Dichtungsmasse leicht ablösen lässt.

Die Siliconstreifen werden 7 Tage zum vollständigen Aushärten und anschließend im Normklima (23 °C, 50 % rel. Feuchte) für mindestens 2 Tage gelagert.

Tabelle 2: Formulierung zur Herstellung einer Einkomponenten Raumtemperatur-vernetzenden (RTV-1K) Silicondichtungsmasse (acetoxy-System)

| | | | Vernetzer 42 g Füllgrad 12 % $SiO_2$ | | Vernetzer 30 g Füllgrad 12 % $SiO_2$ | |
|---|---|---|---|---|---|---|
| **Formulierungsbestandteil [Allgemeiner Name]** | **Chemische Bezeichnung** | **Produktname und Hersteller** | **Einwaage [g]** | **Anteil [%]** | **Einwaage** | **Anteil** |
| **Siliconpolymer** OH-terminiertes Siliconpolymer (Viskosität = 50.000 mPa*s) | α,ω-Hydroxydimethylsiloxy-polydimethylsiloxan | **Silopren® E 50** GE Bayer Silicones GmbH & Co. KG | 468,00 | 58,6 | 468,00 | 59,5 |
| **Weichmacher** nicht-funktionelles Poly-dimethylsiloxan (Siliconöl, Viskosität = 1.000 mPa*s) | α,ω-Trimethylsiloxy-polydimethylsiloxan | **Oil M 1000** GE Bayer Silicones GmbH & Co. KG | 184,50 | 23,1 | 184,50 | 23,5 |
| **Aktiver Füllstoff** Kieselsäure | Fällungskieselsäure | **Beispiel 1 und Vergleichsbeispiel 1-2** | 95,79 | 11,999 | 95,79 | 12,2 |
| **Vernetzer** | Ethyltriacetoxysilan | **Ethyltriacetoxysilan** ABCR GmbH & Co.KG | 42,00 | 5,3 | 30,00 | 3,8 |
| **Stabilisator** | | **TP 3556** GE Bayer Silicones GmbH & Co. KG, | 8,00 | 1,0 | 8,00 | 1,0 |
| **Katalysator** | Dibutylzinndiacetat | **TEGOKAT® 233** Goldschmidt TIB GmbH | 7 Tr. 0,01 g | 0,001 | 7 Tr. 0,01 g | 0,001 |
| **Gesamtmengen** | | | **798,3** | **100** | **786,3** | **100** |

Tr. = Tropfen

### 2.3 Bestimmung der rheologischen Eigenschaften und der Lagerstabilität von RTV-1K-Dichtungsmassen

Die gemäß Beispiel 2, Punkt 1, "Herstellung von acetatvernetzenden RTV-1K-Silicondichtungsmassen mit Fällungskieselsäuren" hergestellten Dichtungsmassen werden vor der Prüfung mindestens 24 h im Klimaraum bei 23 °C / 50 % rel. Feuchte gelagert.

Zur Prüfung der Lagerstabilität der Dichtmassen werden zwei Tuben für 35 Tage im Klimaraum bei 23 °C / 50 % rel. Feuchte gelagert und jeweils nach 1, 7, 14, 21, 28 und 35 Tagen Lagerzeit geprüft. Zudem werden zwei weitere Tuben in einem Umluftofen bei 50 °C für 35 Tage gelagert und ebenfalls nach 1, 7, 14, 21, 28 und 35 Tagen Lagerzeit geprüft.

Die Bestimmung der rheologischen Eigenschaften erfolgt mittels eines Rheometers RheoStress 1 der Fa. Haake (Steuerung über PC durch das Programm RheoWin Pro). Die Bedienung des Geräts und der Software ist in der Betriebsanleitung von Fa. Haake ausführlich beschrieben. Für die Messung ist ein Stempel mit einem Durchmesser von 35 mm und der Messplattenaufsatz MPC 35 zu verwenden. Die Messung wird unter folgenden Bedingungen durchgeführt:

| | |
|---|---|
| Spaltabstand zwischen Stempel und Messplattenaufsatz: | 0,5 mm |
| Messtemperatur: | 23 °C |
| Messbereich (Scherrate): | 0 - 10 1/s |
| Anzahl der Messpunkte: | 400 |

Die Messpunkte werden in einem Diagramm dargestellt, das auf der x-Achse die Scherrate $\gamma$ und auf der $\gamma$-Achse die Schubspannung $\tau$ darstellt. Bei der Scherrate = 10 1/s wird die Schubspannung abgelesen und daraus die Viskosität $\eta$ bei 10 l/s gemäß $\eta = \tau / \gamma$ errechnet. Gemessen werden zwei Tuben, je Tube werden mindestens drei Messungen durchgeführt. Aus den sechs Einzelergebnissen werden der höchste und niedrigste Wert gestrichen. Aus den verbleibenden vier Ergebnissen wird der Mittelwert berechnet.

Für die Ermittlung der Fließgrenze wird das Modell nach Casson verwendet. Als Datenbasis zur Berechnung der Fließkurve nach Casson wird der Bereich von 0,2 bis 2 1/s aus dem Scherrate-Schubspannung-Diagramm zugrunde gelegt. Folgende Abhängigkeit wird definiert:

$$\tau = f\left(\mathring{\gamma}\right)$$

Der Wert auf der y-Achse, bei dem diese die nach Casson errechneten Fließkurve schneidet, wird als Fließgrenze nach Casson angegeben.

Die Ermittlung sowohl der Viskosität bei 10 1/s als auch der Fließgrenze nach Casson erfolgt automatisch unter den o. a. Bedingungen mittels der Software RheoWin Pro.

### 2.4 Bestimmung der Zugfestigkeit und der Bruchdehnung von vulkanisiertem Siliconkautschuk

Diese Bestimmung erfolgt in Anlehnung an DIN 53504 und dient zur Ermittlung der Zugfestigkeit und der Bruchdehnung von Probekörpern bestimmter Form aus Elastomeren bei Dehnung der Probekörper mit konstanter Geschwindigkeit bis zum Reißen. Dabei sind die Zugfestigkeit und die Bruchdehnung wie folgt definiert:

- Die Zugfestigkeit $\delta_{max}$ ist der Quotient aus der gemessenen Höchstkraft $F_{max}$ und dem Anfangsquerschnitt $A_0$ des Probekörpers.
- Die Bruchdehnung $\varepsilon_R$ ist der Quotient aus der im Augenblick des Reißens gemessenen Änderung $L_\Delta$ der Meßlänge und der ursprünglichen Messlänge $L_0$ des Probekörpers.

Die Messung wird auf einer Zugprüfmaschine (Fa. Zwick/Roell, Typ Z010) durchgeführt, wobei darauf zu achten ist, dass die vorgewählte Höchstkraft variabel ist, dass die Einspannvorrichtung den Prüfkörper auch bei hoher Streckung ohne mechanische Beschädigung festhält und den Steg des Prüfkörpers auch bei hoher Streckung ohne mechanische Beschädigung auf der eingestellten Messlänge $L_0$ hält und dass der Federdruck an den Klemmbacken des Feindehnungsmessers einstellbar ist.

Es sind die in Figur 1 beschriebenen Normstäbe S 1 zu verwenden.

Aus den vulkanisierten 2 mm starken Streifen werden mit einem Stanzeisen für Normstäbe S 1 die entsprechenden Prüfkörper ausgestanzt und mindestens 24 h unter Normklima (23 °C, 50 % rel. Feuchte) bis zur Prüfung

gelagert.

Es sind 4-6 Probekörper bei einer Temperatur von (23 ± 2) °C zu prüfen. Vor dem Zugversuch ist die Dicke d und die Breite b der Probekörper zu messen. Beim Einspannen sind die Normstäbe mittig zwischen die beiden Einspannbacken einzuspannen. Der Abstand zwischen den Einspannbacken beträgt L = 50 mm. Der Feindehnungsmesser ist auf die Messlänge $L_0$ = 25 mm einzustellen und mittig zwischen den Einspannbacken zu fixieren. Die Anzeigen sind auf Null zu stellen. Die Vorschubgeschwindigkeit der ziehenden Klemme beträgt v = 500 mm/min. Es wird die Kraft $F_{max}$ und die Längenänderung $L_\Delta$ beim Reißen festgestellt. Daraus werden Zugfestigkeit und Bruchdehnung wie folgt errechnet und als Mittelwert der Einzelmessungen angegeben:

$$Zugfestigkeit \quad \delta_{max} = \frac{F_{max}}{A_0}$$

mit

$\delta_{max}$ = Zugfestigkeit in [MPa] oder in [N/mm$^2$]
$F_{max}$ = Höchstkraft in [N]
$A_0$ = Anfangsquerschnitt (a * b) in [mm$^2$]

$$Bruchdehnung \quad \varepsilon_R = \frac{L_\Delta}{L_0} * 100$$

mit

$\varepsilon_R$ = Bruchdehnung in [%]
$L_\Delta$ = Längenänderung in [mm]
$L_0$ = Anfangslänge in [mm]

**2.5 Bestimmung des Weiterreißwiderstandes von vulkanisiertem Siliconkautschuk**

Diese Bestimmung erfolgt in Anlehnung an ASTM D 624 B. Der Weiterreißversuch an Elastomeren dient zur Ermittlung des Widerstandes, den eine eingeschnittene Probe dem Weiterreißen entgegensetzt.

Der Weiterreißwiderstand eines Elastomers ist abhängig von dessen Formulierungsbestandteilen und dessen Verarbeitung, der Vulkanisation und der Prüfgeschwindigkeit. Geprüft wird der Einfluss des Verstärkerfüllstoffs auf den Weiterreißwiderstand der Vulkanisate. Die Messung wird auf einer Zugprüfmaschine (Fa. Zwick/Roell, Typ Z010) durchgeführt, wobei darauf zu achten ist, dass die vorgewählte Höchstkraft variabel ist und dass die Einspannungsvorrichtung den Prüfkörper auch bei hoher Dehnung ohne mechanische Beschädigung festhält.

Aus den vulkanisierten 2 mm starken Siliconstreifen werden Prüfkörper (Figur 2) mit einem ASTM D 624 B entsprechenden Stanzeisen geschnitten und mindestens 24 h unter Normklima (23 °C, 50 % rel. Feuchte) bis zur Prüfung gelagert.

Das Stanzeisen verfügt am Scheitelpunkt des Innenradius über ein Messer, mit dem beim Ausstanzen an dieser Stelle ein Schlitz 0,5 mm ± 0,05 mm tief eingeschnitten wird.

Es sind 4-6 Probekörper bei einer Temperatur von (23 ± 2)°C zu prüfen. Die Probekörper müssen 3 Stunden vor der Prüfung bei Prüftemperatur gelagert werden. Die Dicke a der Probekörper ist vor der Prüfung mit einem Dickenmessgerät auf + 0,01 mm zu ermitteln. Die Probe wird in die Einspannklemmen der Zugprüfmaschine gespannt und mit einer Vorschubgeschwindigkeit von v = 500 mm/min gerissen: Dabei ist darauf zu achten, dass der Schlitz vom Prüfer aus auf der linken Seite liegt.

Die beiden Prüfkörper mit dem höchsten und dem niedrigsten Wert werden bei der Auswertung nicht berücksichtigt. Der Weiterreißwiderstand $\delta_{w1}$ in [N/mm] berechnet sich aus den Variablen $F_{max1}$ (Höchstkraft in [N]) sowie $a_1$ (Dicke in [mm]) und wird als Mittelwert der verbleibenden Einzelmessungen angegeben:

$$Weiterreißwiders\,tan\,d \quad \delta_{w1} = \frac{F_{max1}}{a_1}$$

Zur Beurteilung der Standfestigkeit von Siliconkautschukformulierungen, in die die erfindungsgemäßen Kieselsäuren eingearbeitet wurden, dienen die Messergebnisse für die Fließgrenze nach Casson und die Viskosität bei

einer Scherrate von 1/10 (Tabelle 3).

Unter Standfestigkeit ist das rheologische Verhalten einer RTV-1K-Silicondichtmasse zu verstehen. Als gute Standfestigkeit wird bezeichnet, wenn Siliconkautschuk, auf eine senkrechte Fläche appliziert, dort über 24 h während der Aushärtung ohne Verlaufen haftet. Eine ausreichend gute Standfestigkeit kann man an einer Viskosität von ≥ 100 Pas und einer Fließgrenze von ≥ 90 Pa erkennen. Die Werte für die Fließgrenze nach Casson zeigen deutlich, dass die Fließgrenze der Siliconkautschukformulierungen enthaltend die erfindungsgemäße Kieselsäure nach Beispiel 1 mit einem Wert von 90 wesentlich höher liegt als bei den Siliconkautschukformulierungen enthaltende die Vergleichskieselsäuren. D. h. dass Siliconkautschukformulierungen, in die die erfindungsgemäßen Kieselsäuren eingearbeitet wurden, daher eine höhere Standfestigkeit aufweisen. Solche Formulierungen bleiben in der Form bestehen, in der sie appliziert wurden und zeigen keine Neigung zum Verlaufen. Dies wird auch durch die Viskositätswerte bestätigt. So zeigen die erfindungsgemäßen Kieselsäuren gegenüber den Vergleichsbeispielen eine gleiche bis höhere Viskosität.

Die mechanische Stabilität (Zugfestigkeit und Weiterreißwiderstand) sowie die Flexibilität (Bruchdehnung) der ausgehärteten Siliconkautschukformulierungen kann durch deren Verhalten bei Zugbelastung unter verschiedenen Bedingungen beurteilt werden (Tabelle 4).

Die Messergebnisse für die mechanischen Eigenschaften können wie folgt interpretiert werden: Für die Siliconkautschukformulierung 2c enthaltend die Kieselsäure nach Vergleichsbeispiel 2 ist es überhaupt nicht möglich Siliconvulkanisate herzustellen (vollständige Aushärtung direkt nach Herstellung), demnach sind die mechanischen Eigenschaften auch nicht messbar. Die Messwerte für die Formulierungen enthaltend die erfindungsgemäße Kieselsäure nach Beispiel 1 zeigen, dass die Mindestanforderungen an die mechanische Stabilität (Zugfestigkeit und Weiterreißwiderstand) sowie die Flexibilität (Bruchdehnung) der ausgehärteten Siliconkautschukformulierungen erfüllt werden. Im Vergleich zum Vergleichsbeispiel 1 zeigt die erfindungsgemäße Kieselsäure eine bessere mechanische Stabilität (höhere Messwerte für Zugfestigkeit und Weiterreißwiderstand) sowie eine gleiche bzw. bessere Flexibilität (gleiche oder höhere Messwerte für die Bruchdehnung).

Die Lagerstabilität, d. h. die Änderung der rheologischen Eigenschaften wie Fließgrenze und Viskosität sowie das negative Aushärtverhalten in der Tube über die Zeit, wird in den Tabellen 5 und 6 dargestellt. Dabei wurde sowohl die Lagerung bei Raumtemperatur als auch bei erhöhter Temperatur (50°C) betrachtet. Es zeigt sich deutlich, dass die Siliconkautschukformulierungen enthaltend die erfindungsgemäße Kieselsäure über den untersuchten Lagerungszeitraum von 35 Tagen sich nicht oder nur unwesentlich in ihren rheologischen Eigenschaften, Viskosität bei Scherrate 1/10 und Fließgrenze nach Casson, verändern. D. h. die guten Verdickungs- sowie Verarbeitungseigenschaften (wie z.B. Extrudierbarkeit bzw. Auspressbarkeit) sind auch noch nach der Lagerung unter den genannten Bedingungen vorhanden, ohne dass die Dichtmasse bereits in der Tube vorvernetzt bzw. ausvulkanisiert ist.

Demgegenüber ist für das Vergleichsbeispiel 1 in Siliconkautschukformulierung 2b schon in den ersten 21 Tagen eine negative Veränderung der rheologischen Eigenschaften zu beobachten. Im Vergleich zu den Ausgangswerten steigt die Viskosität und Fließgrenze deutlich an, was auf eine frühzeitige Vernetzung der Dichtmasse hindeutet. Zwischen dem 21. und 28. Tag härtet die Probe bereits in der Tube aus und ist damit nicht mehr verarbeitbar. Ähnlich verhält es sich nach Lagerung bei erhöhter Temperatur. Dort tritt das frühzeitige Aushärten von Vergleichsbeispiel 1 schon zwischen dem 2. und 7. Tag ein. Noch schlechter verhält sich die Fällungskieselsäure Ultrasil® VN 3 (Vergleichsbeispiel 2). Hier ist die Siliconkautschukmasse 2c sofort nach der Herstellung ausgehärtet und eine Abfüllung in die Kartusche (Tube) ist gar nicht mehr möglich bzw. diese Siliconkautschukmasse ist nicht für die RTV-1K Anwendungen geeignet. In beiden Fällen ist der Grund dafür in der zu hohen Feuchtebeladung - ausgedrückt in der Gleichgewichtsfeuchte 20 °C/70 % rel. Feuchte - der beiden Vergleichskieselsäuren zu sehen, die ein vorzeitiges und rasches Vernetzen des Siliconkautschuks initiiert. Dagegen kann durch die geringe Feuchtebeladung der erfindungsgemäßen Kieselsäuren die lange Lagerstabilität und damit die auch danach noch zu gewährleistende Verarbeitbarkeit sichergestellt werden.

Tabelle 3

| **Beispiel** | **Eingesetzte Kieselsaure aus** | **Beladung [%]** | **Gehalt an Vernetzer [g]** | **StabilisatorGE TP 3556 [g]** | **Fließgrenze Casson [Pa]** | **Viskosität bei 10 1/s [Pa*s]** |
|---|---|---|---|---|---|---|
| 2a | Beispiel 1 | 12 | 42,0 | 8, 0 | 90 | 102 |
| 2b | Vergleichsbeispiel 1 | 12 | 42,0 | 8,0 | 13 | 102 |
| 2c | Vergleichsbeispiel 2 | 12 | 42,0 | 8, 0 | / | / |

Tabelle 4

| Beispiel | Eingesetzte Kieselsäure aus | Beladung [%] | Zugfestigkeit [N/mm$_2$] | Weiterreißwider stand [N/mm] | Bruchdehnung [%] |
|---|---|---|---|---|---|
| 2a | Beispiel 1 | 12 | 3,4 | 12 | 652 |
| 2b | Vergleichsbeispiel 1 | 12 | 2,5 | 11 | 590 |
| 2c | Vergleichsbeispiel 2 | 12 | - | - | - |

Tabelle 5: Rheologie über 35 Tage bei RT

| Beispiel | Eingesetzte Kieselsäure aus | Beladung in [%] | Gehalt an Vernetzer in [g] | Temp. in [°C] | Dauer in [d] | Visk. Bei 10 1/s in [Pa*s] | Fließgrenze Casson in [Pa] |
|---|---|---|---|---|---|---|---|
| 2a | Beispiel 1 | 12 | 42 | 23 | 0 | 103 | 90 |
| | | | | | 35 | 108 | 89 |
| 2b | Vergleichsbeispiel 1 | 12 | 42 | 23 | 0 | 102 | 13 |
| | | | | | 21 | 173 | 77 |
| | | | | | | Vorvernetzung in der Tube ab dem 22.-28. Tag | |
| 2c | Vergleichsbeispiel 2 | 12 | 42 | 23 | 0 | Direkt nach Fertigstellung vollständig vernetzt | |

Tabelle 6: Rheologie über 35 Tage bei 50 °C

| Beispiel | Eingesetzte Kieselsäure aus | Beladung in [%] | Gehalt an Vernetzer in [g V] | Temp. in [°C] | Dauer in [d] | Visk. Bei 10 1/s in [Pa*s] | Fließgrenze Casson in [Pa] |
|---|---|---|---|---|---|---|---|
| 2a | Beispiel 1 | 12 | 42 | 50 | 0 | 80 | 98 |
| | | | | | 35 | 114 | 121 |
| 2b | Vergleichsbeispiel 1 | 12 | 42 | 50 | 0 | 218 | 96 |
| | | | | | | Vorvernetzung in der Tube ab dem 02.-07. Tag | |
| 2c | Vergleichsbeispiel 2 | 12 | 42 | 50 | 0 | Direkt nach Fertigstellung vollständig vernetzt | |

## Patentansprüche

1. Hydrophile Fällungskieselsäure **gekennzeichnet durch** folgende physikalisch-chemischen Parameter:

| | |
|---|---|
| Gleichgewichtsfeuchte (bei 70 % relativer Feuchte / 20 °C) | 0,5 - 5,0 Gew.-% |
| BET-Oberfläche | 50 - 250 $m^2/g$ |
| CTAB-Oberfläche | 50 - 250 $m^2/g$ |
| DBP (wasserfrei) | 200 - 350 g/100g |
| pH-Wert | 4 - 8 |

2. Hydrophile Fällungskieselsäure nach Anspruch 1, **dadurch gekennzeichnet, dass** die modifizierte Stampfdichte

kleiner gleich 70 g/l beträgt.

3. Hydrophile Fällungskieselsäure nach einem der Ansprüche 1 oder 2, **dadurch gekennzeichnet, dass** die Silanolgruppendichte 0,5 bis 3,5 SiOH/$nm^2$ beträgt.

4. Hydrophile Fällungskieselsäure nach einem der Ansprüche 1 bis 3, **dadurch gekennzeichnet, dass** 5 bis 100 % der Partikel der volumenbezogenen Partikelverteilungskurve < 1 $\mu$m sind.

5. Hydrophile Fällungskieselsäure nach einem der Ansprüche 1 bis 4, **dadurch gekennzeichnet, dass** der $d_{90}$ -Wert nicht größer als 0,01 - 10 $\mu$m ist.

6. Hydrophile Fällungskieselsäure nach einem der Ansprüche 1 bis 5, **dadurch gekennzeichnet, dass** die Partikelverteilungskurve bimodal ist.

7. Hydrophile Fällungskieselsäure nach einem der Ansprüche 1 bis 6, **dadurch gekennzeichnet, dass** der Glühverlust 0,1 - 3,0 Gew.-% beträgt.

8. Hydrophile Fällungskieselsäure nach einem der Ansprüche 1 bis 7, **dadurch gekennzeichnet, dass** der Trocknungsverlust 0,1 - 3,0 Gew.-% beträgt.

9. Verfahren zur Herstellung einer hydrophilen Kieselsäure gemäß einem der Ansprüche 1 bis 8, **dadurch gekennzeichnet, dass** das Verfahren folgende Schritte umfasst:

1. Umsetzung von zumindest einem Silikat mit zumindest einem Säuerungsmittel
2. Filtration und Waschen der erhaltenen Kieselsäure
3. Trocknung der erhaltenen Kieselsäure bzw. des Filterkuchens
4. Temperung der getrockneten Kieselsäure mit einem Wirbelbettreaktor und den folgenden Teilschritten

4a. Einfüllen der Kieselsäure in den Wirbelbettreaktor,
4b. Vorheizen des Reaktors auf 300 bis 800 °C, wobei gleichzeitig der Reaktor von einem Inertgas und/oder Stickstoff-Luft-Gemisch so durchströmt wird, dass sich eine Fluidierungsgeschwindigkeit von 0,02 bis 0,06 m/s einstellt,
4c. Einspeisung eines Gasgemisches I aus Wasserdampf und einem Inertgas, oder eines Gasgemisches II aus Wasserdampf, einem Inertgas und Luft bei 300 bis 800 °C für die Dauer von 0,25 bis 6 h, wobei das Gasgemisch den Reaktor mit einer Fluidisierungsgeschwindigkeit von 0,02 bis 0,06 m/s durchströmt und die Gasgemische I und II eine Wasserdampfkonzentration von 10 bis 95 Vol.-% und im Falle des Gasgemisches II einen Sauerstoffgehalt von 0,01 bis 21 Vol.-% aufweisen,
4d. Unterbrechung der Dampfzugabe und Austreiben des Dampfes durch ein Inertgas, z. B. Stickstoff, und/oder ein Inertgas-Luft-Gemisch bei 300 bis 800 °C, wobei das Gas bzw. Gasgemisch den Reaktor mit einer Fluidisierungsgeschwindigkeit von 0,02 bis 0,06 m/s durchströmt und im Falle der Verwendung des Inertgas-Luft-Gemisches dieses Sauerstoffgehalt von 0,01 bis 21 Vol.-% aufweist,
4e. Abkühlung der getemperten Kieselsäure auf Raumtemperatur in einer trockenen Prozeßatmosphäre, wobei bei Verwendung eines Inertgas-Luft-Gemisches dieses Sauerstoffgehalt von 0,01 bis 21 Vol.-% aufweist.

10. Verfahren nach Anspruch 9, **dadurch gekennzeichnet, dass** Schritt 1 die folgenden Teilschritte umfasst

1a Herstellung einer Vorlage aus Wasser bzw. Wasser und zumindest einem Silikat und/oder einer Silikatlösung, wobei der pH-Wert der so erhaltenen Vorlage bevorzugt zwischen pH 5 und pH 10 und die Temperatur der Vorlage bevorzugt zwischen 80 und 100 °C liegt,
1b Dosierung zumindest eines Silikats und/oder einer Silikatlösung und zumindest eines Säuerungsmittels unter Rühren bei 80 bis 100 °C in die Vorlage aus Teilschritt 1a) so lange, bis des Viskositätsanstiegspunkt erreicht ist,
1c Stoppen der Zugabe von Silikat und/oder Silikatlösung und Säuerungsmittel und Rühren der Fällsuspension bei einer Temperatur von 80 bis 100 °C für die Dauer von 15 bis 120 min,
1d Zugabe von Silikat und/oder Silikatlösung, so dass der pH-Wert der Fällsuspension auf pH 8 bis pH 11 erhöht wird und nach Erreichen des erhöhten pH-Wertes Rühren der Fällsuspension für die Dauer von 15 bis 90 min bei diesem pH-Wert und einer Temperatur von 80 bis 100 °C,
1e Zugabe von Säuerungsmittel, so dass der pH-Wert der Fällsuspension auf pH 7 bis pH 10, bevorzugt bei

gleichbleibender Temperatur wie in Teilschritt 1d), erniedrigt wird,
1f Fortsetzung der Fällung gemäß Teilschritt 1b), wobei Silikat und/oder Silikatlösung und Säuerungsmittel gleichzeitig bei einer Temperatur von 80 bis 100 °C so lange zugegeben werden, bis ein Feststoffgehalt der Fällsuspension erreicht ist, der nach Durchführung von Teilschritt 1g) zum gewünschten Feststoffgehalt führt.
1g Zugabe eines Säuerungsmittels bei einer Temperatur der Fällsuspension von 80 bis 100 °C, so dass der pH-Wert der Fällsuspension auf 2 bis 6 erniedrigt wird und der Feststoffgehalt der Fällsuspension am Ende dieses Teilschritts zwischen 30 und 70 g/l liegt.

**11.** Verfahren nach Anspruch 10, **dadurch gekennzeichnet, dass** der pH-Wert für die Dauer von Teilschritt 1b) konstant auf einem Wert zwischen pH 7 und pH 10 gehalten wird.

**12.** Verfahren nach einem der Ansprüche 9 bis 11, **dadurch gekennzeichnet, dass** die erfindungsgemäßen Kieselsäuren in einem Schritt 3a, d. h. zwischen den Schritten 3 und 4 oder in einem Schritt 5, d. h. nach Schritt 4, oder sowohl in Schritt 3a, d. h. zwischen Schritt 3 und 4, als auch in Schritt 5, d. h. nach Schritt 4, vermahlen werden.

**13.** Verfahren nach Anspruch 12, **dadurch gekennzeichnet, dass** die Mahlparameter so gewählt werden, dass das vermahlene Produkt im Bereich < 1 μm der volumenbezogenen Partikelverteilung einen Anteil an feinen Partikeln von 5 bis 100 % und/oder einen $d_{90}$ -Wert der volumenbezogene Partikelverteilungskurve zwischen 0,01 und 10 μm aufweist.

**14.** Hydrophile Fällungskieselsäure, **dadurch gekennzeichnet, dass** sie nach dem Verfahren nach einem der Ansprüche 10 bis 13 erhältlich ist.

**15.** Verwendung von hydrophilen Fällungskieselsäuren gemäß einem der Ansprüche 1 bis 8 oder 14 zur Herstellung von Dichtungsmassen.

**16.** Verwendung nach Anspruch 15, **dadurch gekennzeichnet, dass** es sich bei der Dichtungsmasse um RTV-1K-Siliconkautschuk bzw. um Silicondichtungsmassen der verschiedenen Vernetzungssysteme (acetoxy-vernetzend, alcoxy-vernetzend und/oder oxim-vernetzend) handelt.

**17.** Dichtungsmasse enthaltend zumindest eine hydrophile Fällungskieselsäure gemäß einem der Ansprüche 1 bis 8.

**18.** Dichtungsmasse nach Anspruch 17, **dadurch gekennzeichnet, dass** es sich bei der Dichtungsmasse um RTV-1K-Siliconkautschuk bzw. um Silicondichtungsmassen der verschiedenen Vernetzungssysteme (acetoxy-vernetzend, alcoxy-vernetzend und/oder oxim-vernetzend) handelt.

**19.** Verwendung der Dichtungsmasse gemäß Anspruch 17 oder 18 in der Bauindustrie als Fugendichtungsmassen, in der Automobilindustrie als Kleb- und Dichtstoff und/oder als Beschichtungsmassen für Textilgewebe.

## Claims

**1.** Hydrophilic precipitated silica **characterized by** the following physicochemical parameters:

| | |
|---|---|
| Equilibrium moisture content (at 70% relative humidity/20°C) | 0.5% - 5.0% by weight |
| BET surface area | 50 - 250 $m^2/g$ |
| CTAB surface area | 50 - 250 $m^2/g$ |
| DBP (anhydrous) | 200 - 350 g/100 g |
| pH | 4 - 8 |

**2.** Hydrophilic precipitated silica according to Claim 1, **characterized in that** the modified tapped density is less than or equal to 70 g/l.

**3.** Hydrophilic precipitated silica according to either of Claims 1 and 2, **characterized in that** the silanol group density is 0.5 to 3.5 $SiOH/nm^2$.

4. Hydrophilic precipitated silica according to any one of Claims 1 to 3, **characterized in that** 5% to 100% of the particles in the volume-based particle distribution curve are < 1 μm.

5. Hydrophilic precipitated silica according to any one of Claims 1 to 4, **characterized in that** the $d_{90}$ value is not greater than 0.01 -10 μm.

6. Hydrophilic precipitated silica according to any one of Claims 1 to 5, **characterized in that** the particle distribution curve is bimodal.

7. Hydrophilic precipitated silica according to any one of Claims 1 to 6, **characterized in that** the loss on ignition is 0.1% - 3.0% by weight.

8. Hydrophilic precipitated silica according to any one of Claims 1 to 7, **characterized in that** the loss on drying is 0.1% - 3.0% by weight.

9. Process for preparing a hydrophilic silica according to any one of Claims 1 to 9, **characterized in that** the process comprises the following steps:

   1. reacting at least one silicate with at least one acidifier
   2. filtering and washing the resulting silica
   3. drying the resulting silica or filtercake
   4. heat-treating the dried silica with a fluidized-bed reactor and the following substeps:

      4a. introducing the silica into the fluidized-bed reactor,
      4b. preheating the reactor to 300 to 800°C, the reactor being traversed at the same time by a flow of inert gas and/or nitrogen/air mixture in such a way as to produce a fluidization velocity of 0.02 to 0.06 m/s,
      4c. feeding in a gas mixture I comprising steam and an inert gas, or a gas mixture II comprising steam, an inert gas and air, at 300 to 800°C for a period of 0.25 to 6 h, the gas mixture traversing the reactor with a fluidization velocity of 0.02 to 0.06 m/s, and the gas mixtures I and II having a steam concentration of 10 to 95% by volume and in the case of gas mixture II an oxygen content of 0.01% to 21% by volume,
      4d. interrupting the addition of steam and expelling the steam by means of an inert gas, nitrogen for example, and/or of an inert gas/air mixture at 300 to 800°C, the gas or gas mixture traversing the reactor with a fluidization velocity of 0.02 to 0.06 m/s, and, if using the inert gas/air mixture, said mixture having an oxygen content of 0.01% to 21% by volume,
      4e. cooling the heat-treated silica to room temperature in a dry process atmosphere, and, if using an inert gas/air mixture, said mixture having an oxygen content of 0.01% to 21% by volume.

10. Process according to Claim 9, **characterized in that** step 1 comprises the following substeps:

    1a preparing an initial charge of water or of water and at least one silicate and/or a silicate solution, the pH of the resulting initial charge being preferably between 5 and 10 and the temperature of the initial charge being preferably between 80 and 100°C,
    1b metering at least one silicate and/or a silicate solution and at least one acidifier into the initial charge from substep 1a) with stirring at 80 to 100°C until the viscosity rise point is reached,
    1c stopping the addition of silicate and/or silicate solution and acidifier, and stirring the precipitation suspension at a temperature of 80 to 100°C for a period of 15 to 120 minutes,
    1d adding silicate and/or silicate solution so that the pH of the precipitation suspension is increased to 8 to 11 and, after the increased pH has been reached, stirring the precipitation suspension for a period of 15 to 90 minutes at this pH and at a temperature of 80 to 100°C,
    1e adding acidifier so that the pH of the precipitation suspension is lowered to 7 to 10, preferably with the temperature remaining the same as in substep 1d),
    1f continuing the precipitation in accordance with substep 1b), adding silicate and/or silicate solution and acidifier simultaneously at a temperature of 80 to 100°C until the solids content of the precipitation suspension reaches a level which, after substep 1g) has been carried out, results in the desired solids content,
    1g adding an acidifier at a temperature of the precipitation suspension of 80 to 100°C, so that the pH of the precipitation suspension is lowered to 2 to 6 and the solids content of the precipitation suspension at the end of this substep is between 30 and 70 g/l.

11. Process according to Claim 10, **characterized in that** for the period of substep 1b) the pH is held constantly at a level between 7 and 10.

12. Process according to any one of Claims 9 to 11, **characterized in that** the silicas according to the invention are ground in a step 3a, i.e. between steps 3 and 4, or in a step 5, i.e. after step 4, or both in step 3a, i.e. between steps 3 and 4, and in step 5, i.e. after step 4.

13. Process according to Claim 12, **characterized in that** the grinding parameters are selected such that the ground product in the range < 1 μm of the volume-based particle distribution has a fine-particle fraction of 5% to 100% and/or a $d_{90}$ value in the volume-based particle distribution curve of between 0.001 and 10 μm.

14. Hydrophilic precipitated silica **characterized in that** it is obtainable by the process according to any one of Claims 10 to 13.

15. Use of hydrophilic precipitated silicas according to any one of Claims 1 to 8 or 14 for producing sealants.

16. Use according to Claim 15, **characterized in that** the sealant is RTV-1K silicone rubber or a silicone sealant of the various crosslinking systems (acetoxy-crosslinking, alkoxy-crosslinking and/or oxime-crosslinking).

17. Sealant comprising at least one hydrophilic precipitated silica according to any one of Claims 1 to 8.

18. Sealant according to Claim 17, **characterized in that** the sealant is RTV-1K silicone rubber or a silicone sealant of the various crosslinking systems (acetoxy-crosslinking, alkoxy-crosslinking and/or oxime-crosslinking).

19. Use of the sealant according to Claim 17 or 18, in the building industry as a joint-sealant, in the automotive industry as an adhesive and sealant and/or as a coating material for textile fabric.

**Revendications**

1. Silice précipitée hydrophile, **caractérisée par** les paramètres physico-chimiques suivants :

| | |
|---|---|
| humidité à l'équilibre (à une humidité relative de 70%/20°C) | 0,5-5,0% en poids |
| surface BET | 50-250 $m^2/g$ |
| surface CTAB | 50-250 $m^2/g$ |
| DBP (anhydre) | 200-350 g/100 g |
| pH | 4-8 |

2. Silice précipitée hydrophile selon la revendication 1, **caractérisée en ce que** la densité tassée modifiée est inférieure à 70 g/l.

3. Silice précipitée hydrophile selon l'une quelconque des revendications 1 ou 2, **caractérisée en ce que** la densité de groupes silanol est de 0,5 à 3,5 groupes $SiOH/nm^2$.

4. Silice précipitée hydrophile selon l'une quelconque des revendications 1 à 3, **caractérisée en ce que** 5 à 100% des particules de la courbe de répartition volumique des particules sont < 1 μm.

5. Silice précipitée hydrophile selon l'une quelconque des revendications 1 à 4, **caractérisée en ce que** la valeur $d_{90}$ n'est pas supérieure à 0,01-10 μm.

6. Silice précipitée hydrophile selon l'une quelconque des revendications 1 à 5, **caractérisée en ce que** la courbe de répartition des particules est bimodale.

7. Silice précipitée hydrophile selon l'une quelconque des revendications 1 à 6, **caractérisée en ce que** la perte au feu est de 0,1-3,0% en poids.

**8.** Silice précipitée hydrophile selon l'une quelconque des revendications 1 à 7, **caractérisée en ce que** la perte au séchage est de 0,1-3,0% en poids.

**9.** Procédé pour la préparation d'une silice précipitée hydrophile selon l'une quelconque des revendications 1 à 8, **caractérisé en ce que** le procédé comprend les étapes suivantes :

1. transformation d'au moins un silicate avec au moins un agent d'acidification
2. filtration et lavage de la silice obtenue
3. séchage de la silice ou du gâteau de filtre obtenu(e)
4. traitement thermique de la silice séchée à l'aide d'un réacteur à lit tourbillonnant et des étapes partielles suivantes

    4a. introduction de la silice dans le réacteur à lit tourbillonnant,
    4b. préchauffage du réacteur à 300 jusqu'à 800°C, le réacteur étant simultanément traversé par un gaz inerte et/ou un mélange azote-air de manière telle qu'une vitesse de fluidisation de 0,02 à 0,06 m/s se règle,
    4c. injection d'un mélange gazeux I de vapeur d'eau et d'un gaz inerte ou d'un mélange gazeux II de vapeur d'eau, d'un gaz inerte et d'air à 300 jusqu'à 800°C pendant une durée de 0,25 à 6 h, le mélange gazeux s'écoulant à travers le réacteur à une vitesse de fluidisation de 0,02 à 0,06 m/s et les mélanges gazeux I et II présentant une concentration en vapeur d'eau de 10 à 95% en volume et, dans le cas du mélange gazeux II, une teneur en oxygène de 0,01 à 21% en volume,
    4d. interruption de l'addition de vapeur et expulsion de la vapeur par un gaz inerte, par exemple de l'azote, et/ou par un mélange gaz inerte-air à 300 jusqu'à 800°C, le gaz ou, selon le cas, le mélange gazeux s'écoulant à travers le réacteur à une vitesse de fluidisation de 0,02 à 0,06 m/s et, dans le cas de l'utilisation du mélange gaz inerte-air, celui-ci présentant une teneur en oxygène de 0,01 à 21% en volume,
    4e. refroidissement de la silice traitée thermiquement à température ambiante dans une atmosphère de procédé sèche, où, lors de l'utilisation d'un mélange gaz inerte-air, celui-ci présente une teneur en oxygène de 0,01 à 21% en volume.

**10.** Procédé selon la revendication 9, **caractérisé en ce que** l'étape 1 comprend les étapes partielles suivantes

1a préparation d'une charge préalable d'eau ou, selon le cas, d'eau et d'au moins un silicate et/ou une solution de silicate, le pH de la charge préalable ainsi obtenue se situant de préférence entre pH 5 et pH 10 et la température de la charge préalable se situant de préférence entre 80 et 100°C,
1b dosage d'au moins un silicate et/ou d'au moins une solution de silicate et d'au moins un agent d'acidification sous agitation à 80 jusqu'à 100°C dans la charge préalable de l'étape partielle 1a) jusqu'à ce qu'on atteigne le point d'augmentation de viscosité,
1c arrêt de l'addition de silicate et/ou de la solution de silicate et d'agent d'acidification et agitation de la suspension de précipitation à une température de 80 à 100°C pendant 15 à 120 min,
1d addition de silicate et/ou d'une solution de silicate de manière telle que la valeur du pH de la suspension de précipitation est augmentée à pH 8 jusqu'à pH 11 et, après avoir atteint la valeur augmentée du pH, agitation de la suspension de précipitation pendant une durée de 15 à 90 minutes à cette valeur du pH et à une température de 80 à 100°C,
1e addition d'agent d'acidification de manière telle que la valeur du pH de la suspension de précipitation est abaissée à pH 7 jusqu'à pH 10, de préférence à une température identique à celle dans l'étape partielle 1d),
1f poursuite de la précipitation selon l'étape partielle 1b), le silicate et/ou la solution de silicate et l'agent d'acidification étant ajoutés simultanément à une température de 80 à 100°C jusqu'à ce que qu'une teneur en solides de la suspension précipitée qui conduit, après la réalisation de l'étape partielle 1g), à la teneur en solides souhaitée soit atteinte,
1g addition d'un agent d'acidification à une température de la suspension de précipitation de 80 à 100°C, de manière telle que le pH de la suspension de précipitation est abaissé à 2 jusqu'à 6 et que la teneur en solides de la suspension de précipitation à la fin de cette étape partielle se situe entre 30 et 70 g/l.

**11.** Procédé selon la revendication 10, **caractérisé en ce que** le pH est maintenu constant à une valeur entre pH 7 et pH 10 pendant la durée de l'étape partielle 1b).

**12.** Procédé selon l'une quelconque des revendications 9 à 11, **caractérisé en ce que** les silices selon l'invention sont broyées dans une étape 3a, c'est-à-dire entre les étapes 3 et 4 ou dans une étape 5, c'est-à-dire après l'étape 4, ou tant dans l'étape 3a, c'est-à-dire entre l'étape 3 et 4, que dans l'étape 5, c'est-à-dire après l'étape 4.

**13.** Procédé selon la revendication 12, **caractérisé en ce que** les paramètres de broyage sont choisis de manière telle que le produit broyé présente, dans la plage < 1 μm de la répartition volumique des particules, une proportion de fines particules de 5 à 100% et/ou une valeur $d_{90}$ de la courbe de répartition volumique des particules entre 0,01 et 10 μm.

**14.** Silice précipitée hydrophile, **caractérisée en ce qu'**elle peut être obtenue par le procédé selon l'une quelconque des revendications 10 à 13.

**15.** Utilisation de silices précipitées hydrophiles selon l'une quelconque des revendications 1 à 8 ou 14 pour la préparation de masses d'étanchéité.

**16.** Utilisation selon la revendication 15, **caractérisée en ce qu'**il s'agit, pour la masse d'étanchéité, d'un caoutchouc de silicone à 1 composant vulcanisant à température ambiante ou, selon le cas, de masses d'étanchéité de silicone présentant différents systèmes de réticulation (réticulation par fonction acétoxy, alcoxy et/ou oxime).

**17.** Masse d'étanchéité contenant au moins une silice précipitée hydrophile selon l'une quelconque des revendications 1 à 8.

**18.** Masse d'étanchéité selon la revendication 17, **caractérisée en ce qu'**il s'agit, pour la masse d'étanchéité, d'un caoutchouc de silicone à 1 composant vulcanisant à température ambiante ou, selon le cas, de masses d'étanchéité de silicone présentant différents systèmes de réticulation (réticulation par fonction acétoxy, alcoxy et/ou oxime).

**19.** Utilisation de la masse d'étanchéité selon la revendication 17 ou 18 dans l'industrie de la construction comme masses d'étanchéité de joints, dans l'industrie automobile comme adhésif et masse d'étanchéité et/ou comme masses de revêtement pour les tissus textiles.

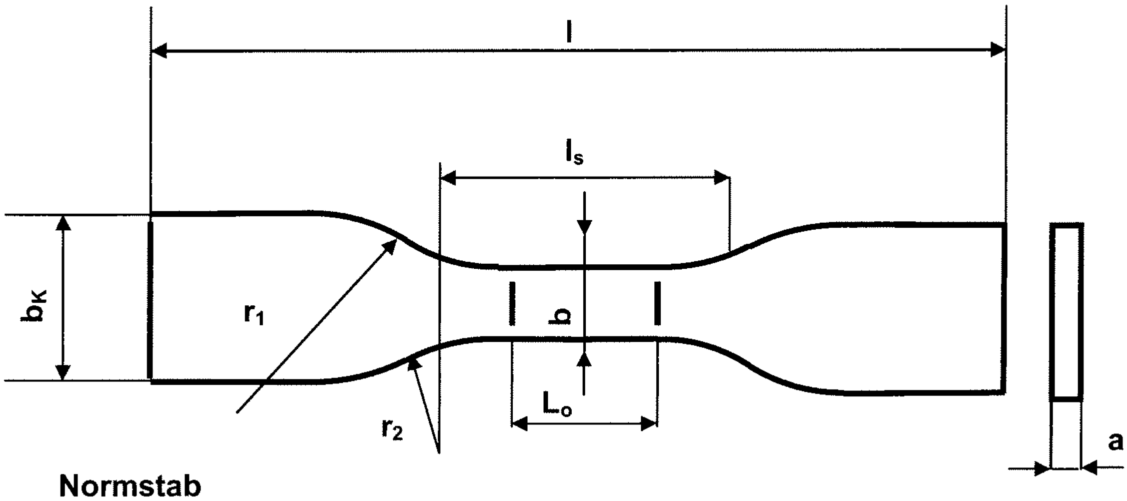


**Normstab**

| | Normstab | | | |
|---|---|---|---|---|
| | S1 | S2 | S3 | S3A |
| Gesamtlänge, mindestens l | 115 | 75 | 35 | 50 |
| Breite der Köpfe $b_K$ | 25 | 12,5 | 6 | 8,5 |
| Länge des Steges $l_s$ | 33 | 25 | 12 | 15 |
| Breite des Stegs ± 0,05 | 6 | 4 | 2 | 4 |
| Übergangshalbmesser, innen $r_1$ | 25 | 12,5 | 2,2 | 0 |
| Übergangshalbmesser außen $r_2$ | 14 | 8 | 2,2 | 10 |
| Dicke a | 1,5 bis 3,0 | 1,5 bis 3,0 | 1,5 bis 3,0 | 1,5 bis 3,0 |
| Vorzugsmaße | 2,0 | 2,0 | 1,0 | 2,0 |
| Meßlänge $L_0$ | 25 | 20 | 10 | 10 |

Figur 1: Form und Maße der verwendeten Normstäbe

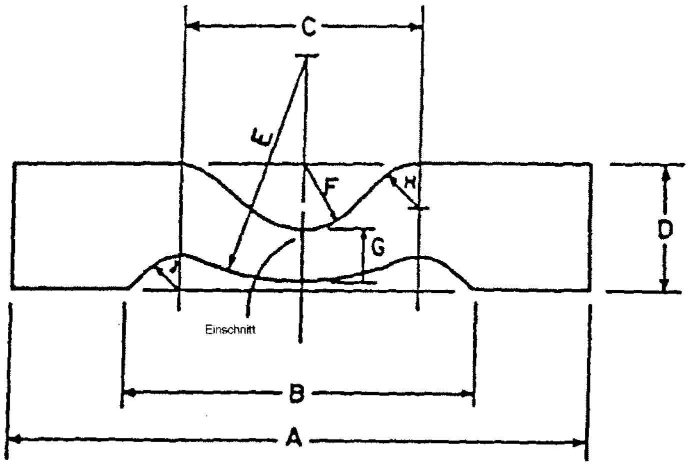


| Maß | Millimeter | |
|---|---|---|
| | Größe | Toleranz |
| A | 110 | ± 0,50 |
| B | 68 | ± 0,50 |
| C | 45 | ± 0,50 |
| D | 25 | ± 0,50 |
| E | 43 | ± 0,50 |
| F | 12,5 | ± 0,50 |
| G | 10,2 | ± 0,50 |
| H | 9 | ± 0,50 |
| J | 7,5 | ± 0,50 |
| Einschnitt | 0,5 | ± 0,50 |

Figur 2: Form und Maße der Prüfkörper

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5395605 A
- WO 2005061384 A
- EP 1557446 A
- EP 1561727 A
- US 4681750 A
- EP 0643015 A
- DE 2447613
- US 4094771 A


### In der Beschreibung aufgeführte Nicht-Patentliteratur


- **S. BRUNAUER ; P. H. EMMETT ; E. TELLER.** Adsorption of Gases in Multimolecular Layers. *J. Am. Chem. Soc.,* 1938, vol. 60, 309
- **JANZEN ; KRAUS.** *Rubber Chem. Technol.,* 1971, vol. 44, 1287
- NFT 45-007
- **W.T. YEN ; R.S. CHAHAL ; T. SALMAN.** *Can. Met. Quart.,* 1973, vol. 12 (3